# EUROPEAN PATENT SPECIFICATION

(11) **EP 4 187 350 B1**
(45) Date of publication and mention of the grant of the patent: **05.11.2025**
(21) Application number: 21864546.3
(22) Date of filing: 04.08.2021
(51) Int. Cl.: G06F 1/16, G09F 9/30, H04M 1/02

(54) **ELECTRONIC DEVICE HAVING TENSION-MAINTAINING STRUCTURE**
ELEKTRONISCHE VORRICHTUNG MIT SPANNUNGSERHALTENDER STRUKTUR
DISPOSITIF ÉLECTRONIQUE AYANT UNE STRUCTURE DE MAINTIEN DE TENSION

(30) Priority: 03.09.2020 KR 20200112280
(43) Date of publication of application: 31.05.2023
(73) Proprietor: Samsung Electronics Co., Ltd., Suwon-si, Gyeonggi-do 16677 (KR)
(72) Inventor: KIM, Jungjin, Suwon-si, Gyeonggi-do 16677 (KR); JUNG, Iksu, Suwon-si, Gyeonggi-do 16677 (KR); KANG, Jaeho, Suwon-si, Gyeonggi-do 16677 (KR); KIM, Hyungsoo, Suwon-si, Gyeonggi-do 16677 (KR); LEE, Minsung, Suwon-si, Gyeonggi-do 16677 (KR)
(74) Representative: HGF
(86) International application number: PCT/KR2021/010269
(87) International publication number: WO 2022/050585

(56) References cited:
- EP-A1- 3 525 062
- EP-A1- 3 702 880
- WO-A1-2019/194520
- KR-A- 20190 062 855
- KR-A- 20190 077 107
- KR-A- 20190 096 026
- KR-A- 20190 143 029
- US-A1- 2006 107 566
- US-A1- 2016 363 960
- US-A1- 2019 033 925
- US-A1- 2019 179 373
- US-B1- 10 747 269

## Description

### [Technical Field]

The invention relates to an electronic device having a tension-maintaining structure.

### [Background Art]

Electronic devices are gradually becoming slimmer, becoming more rigid, being strengthened in design aspects, and being improved in functional elements thereof to be differentiated from each other. Electronic devices are being gradually transformed from a uniform rectangular shape into various shapes. An electronic device may have a transformable structure that is capable of using a large-screen display while being convenient to carry. For example, as an example of a transformable structure, an electronic device may have a structure (e.g., a rollable structure) capable of transforming the display area of a flexible display with at least two housings that operate in a sliding manner. Such an electronic device needs to be provided with reliable sliding operation between the housings. US10747269, EP3702880 and EP3525062 each disclose an electronic device having a flexible display.

### [Disclosure of Invention]

### [Technical Problem]

Electronic devices may include a deformable slidable electronic device (e.g., a rollable electronic device) capable of expanding a display area when used. A slidable electronic device may include a housing (e.g., a first housing) and a slide structure (e.g., a slide bracket or a second housing), which may be coupled to be movable relative to each other by being at least partially fitted together. For example, the slide structure may change the display area of a flexible display by being slid in or slid out from the housing in a predetermined direction and by a predetermined reciprocating distance. For example, the slide structure may be coupled to support at least a portion of a flexible display (an extendable display) and at least partially operate in a sliding manner from the housing, and may induce the display area to be varied by being manually opened or closed by a user or by being automatically shifted to a slide-in state or a slide-out state by an internal driving mechanism.

However, in the slidable electronic device, it is difficult to secure surface quality due to a phenomenon such as lifting due to the reaction force of the flexible display. In addition, in order to slim down the electronic device, it is advantageous as the bending radius of curvature of the flexible display becomes smaller. Accordingly, a countermeasure structure against an increased pulling force and/or frictional force may be required. In addition, when a structure in which a greater force is to be applied by an elastic member (e.g., a torsion spring) that presses the slide structure in a slide-out direction and/or a slide-in direction with reference to a predetermined moving distance is used in the electronic device, inconvenience of a user's operation may be caused.

According to various embodiments of the disclosure, it is possible to provide an electronic device having a tension-maintaining structure.

According to various embodiments, it is possible to provide an electronic device having a tension-maintaining structure that ensures excellent surface quality according to a slide-in operation or a slide-out operation by providing a uniform tension to the flexible display.

According to various embodiments, it is possible to provide an electronic device having a tension-maintaining structure and enhanced in convenience of use.

### SUMMARY OF THE INVENTION

The invention is defined in independent claim 1.

Preferred embodiments are defined in the dependent claims.

In the following, the expression "may" or references to "an embodiment" or to "embodiments", when used in connection with features of the independent claims, do not imply that such features can be considered as optional for the invention.

### [Advantageous Effects of Invention]

According to exemplary embodiments of the disclosure, it is possible to provide excellent surface quality according to a slide-in operation or a slide-out operation by providing a tension-maintaining structure that pulls both ends of the flexible display. With a pressing member, the slide structure is pressed only in the slide-out direction, and during slide-in, the slide-in state is controlled to be maintained with a locker, which may help improve convenience of use.

In addition to this, various effects identified directly or indirectly through this document may be provided.

### [Brief Description of Drawings]

In connection with the description of the drawings, the same or similar components may be denoted by the same or similar reference numerals.
FIG. 1 is a block diagram of an electronic device according to various embodiments of the disclosure in a network environment.
FIGS. 2A and 2B are front perspective views of the electronic device illustrating the slide-in state and the slide-out state according to various embodiments of the disclosure, respectively.
FIGS. 3A and 3B are rear perspective views of the electronic device illustrating the slide-in state and the slide-out state according to various embodiments of the disclosure, respectively.
FIG. 4 is an exploded perspective view of an electronic device according to various embodiments of the disclosure.
FIG. 5A is a cross-sectional view of the electronic device taken along line 5a-5a of FIG. 2A according to various embodiments of the disclosure.
FIG. 5B is an enlarged view of area 5b of FIG. 5A according to various embodiments of the disclosure.
FIG. 5C is an enlarged view of area 5c of FIG. 5A according to various embodiments of the disclosure.
FIG. 5D is a cross-sectional view of the electronic device illustrating the state in which the tension belt is fixed to the slide bracket according to various embodiments of the disclosure.
FIG. 6A is a cross-sectional view of an electronic device taken along line 6a-6a of FIG. 2B according to various embodiments of the disclosure.
FIG. 6B is an enlarged view of area 6b of FIG. 6A according to various embodiments of the disclosure.
FIG. 6C is an enlarged view of area 6c of FIG. 6A according to various embodiments of the disclosure.
FIG. 7A is a perspective view illustrating a state in which a flexible display according to various embodiments of the disclosure is fixed to the slide bracket and the bendable member.
FIG. 7B is an enlarged view of area 7b of FIG. 7A according to various embodiments of the disclosure.
FIG. 7C is an enlarged view of area 7c of FIG. 7A according to various embodiments of the disclosure.
FIG. 7D is an enlarged view of area 7d of FIG. 7A according to various embodiments of the disclosure.
FIG. 8A is a perspective view illustrating a state in which a flexible display according to various embodiments of the disclosure is fixed to the slide bracket and the bendable member.
FIG. 8B is a cross-sectional view of the electronic device according to various embodiments of the disclosure taken along line 8b-8b in FIG. 8A.
FIG. 8C is an enlarged view illustrating a state in which a first elastic member is applied to area 8c of FIG. 8B according to various embodiments of the disclosure.
FIG. 8D is a partial configuration view illustrating an arrangement relationship among a bendable member, an elastic member, and a tension belt according to various embodiments of the disclosure.
FIG. 8E is a view schematically illustrating a principle of tension F applied to a flexible display according to various embodiments of the disclosure.
FIG. 9A is a view illustrating a configuration of a base bracket including a first roller and a second roller according to various embodiments of the disclosure.
FIG. 9B is a view illustrating a state in which a flexible display is supported by a first roller and a second roller according to various embodiments of the disclosure.
FIG. 9C is a cross-sectional view taken along line 9c-9c of FIG. 9B according to various embodiments of the disclosure.
FIG. 10A is a cross-sectional view of an electronic device illustrating an arrangement relationship between a first roller and a second roller in a base bracket according to various embodiments of the disclosure.
FIG. 10B is an enlarged view of area 10b of FIG. 10A according to various embodiments of the disclosure.
FIG. 10C is an enlarged view of area 10c of FIG. 10A according to various embodiments of the disclosure.
FIG. 11A is a view illustrating a portion of the rear surface of an electronic device including a guide structure according to various embodiments of the disclosure.
FIG. 11B is an enlarged view of area 11b of FIG. 11A according to various embodiments of the disclosure.
FIG. 11C is a partial perspective view illustrating an arrangement structure of area 11c of FIG. 11B according to various embodiments of the disclosure.
FIG. 11D is a view illustrating a configuration of a main portion of a buffer structure included in a guide structure according to various embodiments of the disclosure.
FIGS. 12A and 12B are operation views of an electronic device illustrating a state in which a slide bracket is slid in by second elastic members according to various embodiments of the disclosure and a state in which the slide bracket is slid out by the second elastic members, respectively.
FIGS. 13A and 13B are views illustrating operational relationships between a slide bracket and a locker according to various embodiments of the disclosure in a slide-in state and a slide-out state, respectively.

### [Mode for the Invention]

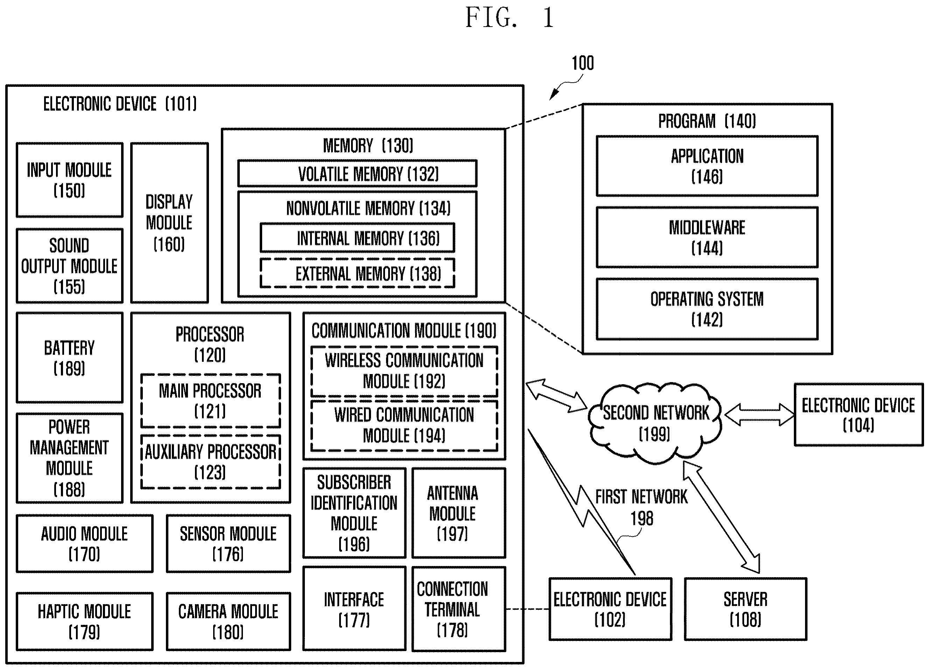

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

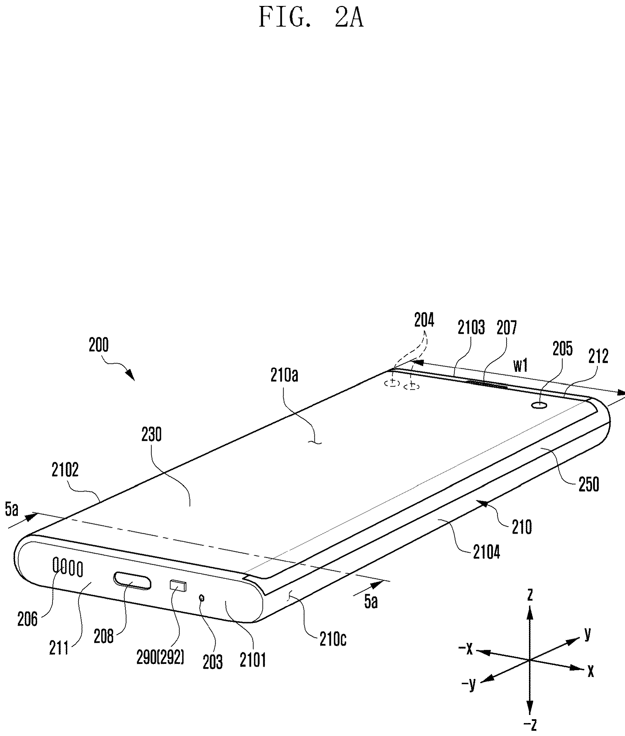

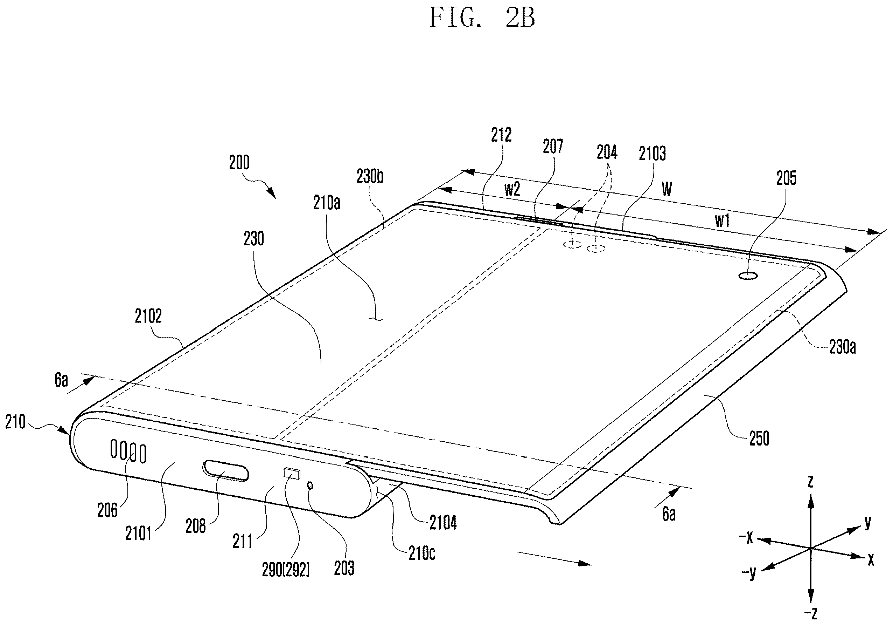

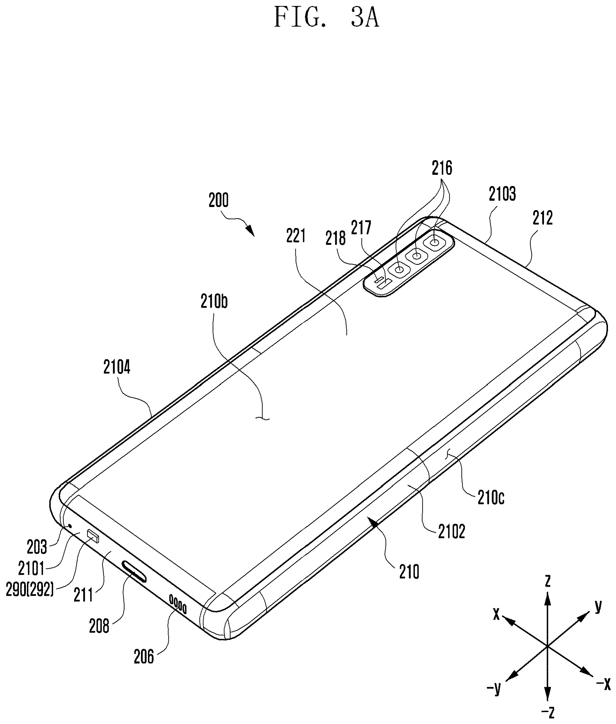

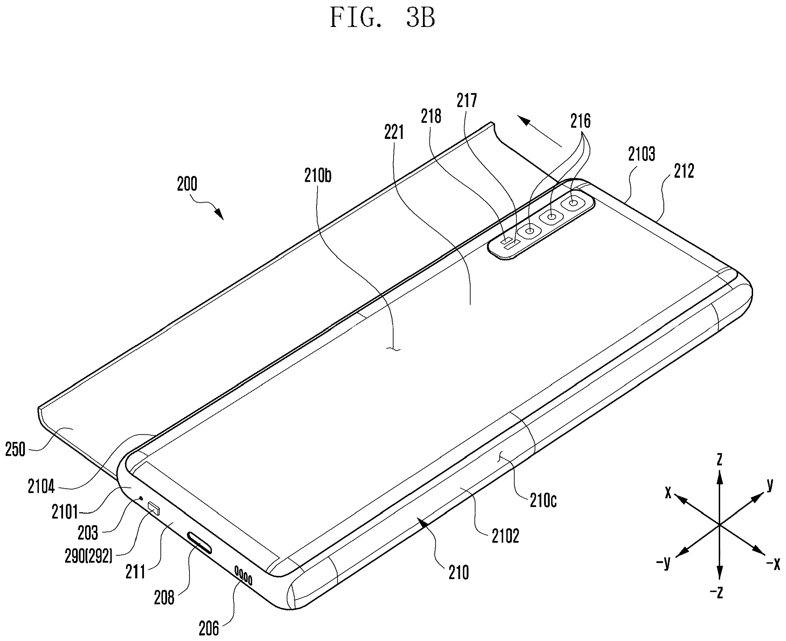

FIGS. 2A and 2B are front perspective views of an electronic device illustrating a slide-in state and a slide-out state according to various embodiments of the disclosure. FIGS. 3A and 3B are rear perspective views of the electronic device illustrating the slide-in state and the slide-out state according to various embodiments of the disclosure, respectively.

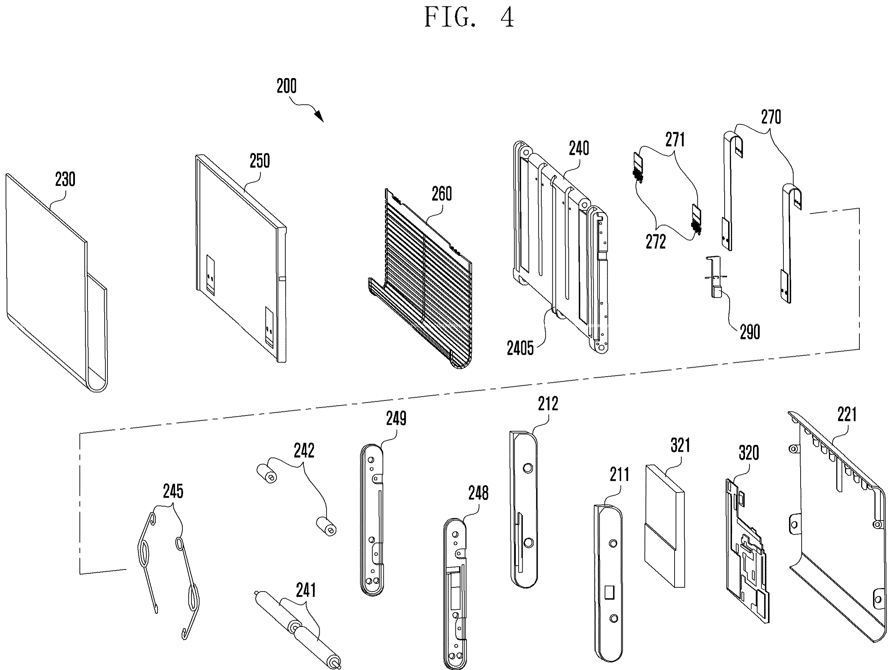

Referring to FIGS. 2A to 3B, an electronic device 200 may include a housing 210 (e.g., a housing structure), and a slide bracket 250 (e.g., a slide structure) coupled to be at least partially movable in a predetermined direction (e.g., the x-axis direction) and by a predetermined reciprocating distance from the housing 210 and configured to support at least a portion of the flexible display 230. According to an embodiment, the slide bracket 250 may include a bendable member (e.g., the bendable member 260) (e.g., a multi-bar assembly, a hinge rail, or an articulated hinge module) coupled to one end thereof and coupled to at least a portion of the flexible display 230. For example, when the slide bracket 250 performs a sliding operation from the housing 210, the bendable member (e.g., the bendable member 260 of FIG. 4) may be at least partially slid into the inner space of the housing 210 while supporting the flexible display 230.

According to various embodiments, the electronic device 200 may include a housing 210 (e.g., a housing structure) that includes a front surface 210a (e.g., a first surface) facing a first direction (e.g., the z-axis direction), a rear surface 210b (e.g., a second surface) facing a second direction (e.g., the -z-axis direction) opposite to the first direction, and a side surface 210c surrounding a space between the front surface 210a and the rear surface 210b and at least partially exposed to the outside. According to an embodiment, the rear surface 210b may include a rear surface cover 221 configured as at least a portion of the housing 210. In some embodiments, the housing 210 may be configured with at least some of a base bracket (e.g., the base bracket 240 of FIG. 4) disposed in the inner space of the electronic device 200 and configured to guide the slide bracket 250, one or more side surface members (e.g., the side surface members 248 and 249 of FIG. 4) coupled to at least a portion of the base bracket (e.g., the base bracket 240 of FIG. 4), and a rear surface cover 221. According to an embodiment, the side surface members (e.g., the side surface members 248 and 249 of FIG. 4) may be disposed not to be visible from the outside through one or more side surface covers 211 and 212 disposed to face the outside. According to an embodiment, the rear surface cover 221 may be made of, for example, polymer, coated or colored glass, ceramic, metal (e.g., aluminum, stainless steel (STS), or magnesium), or a combination of two or more of these materials. In some embodiments, the rear surface cover 221 may extend to at least a portion of the side surface 210c.

According to an embodiment, the side surface 210c may include a first side surface 2101 having a first length, a second side surface 2102 extending from the first side surface 210 in a direction perpendicular to the first side surface 210 and having a second length longer than the first length, a third side surface 2103 extending from the second side surface 2102 to be parallel to the first side surface 2101 and having the first length, and a fourth side surface 2104 extending from the third side surface 2103 to be parallel to the second side surface 2102 and having the second length. According to an embodiment, the slide bracket 250 supports the flexible display 230 and may slide out from the second side surface 2102 toward the fourth side surface 2104 (e.g., the x-axis direction) to expand the display area of the flexible display 230, or slide in from the fourth side surface 2104 toward the second side surface 2102 (e.g., the -x-axis direction) to contract the display area of the flexible display 230. According to an embodiment, the one or more side surface members (e.g., the side surface members 248 and 249 of FIG. 4) may be disposed on the first side surface 2101 and the third side surface 2103, respectively, and may be disposed to be invisible from the outside through the first side surface cover 211 and the second side surface cover 212.

According to various embodiments, the electronic device 200 may include a flexible display 230 disposed to be supported by the slide bracket 250. According to an embodiment, the flexible display 230 may include a first area 230a (e.g., a fixed portion) supported by the slide bracket 250, and a second area 230b (e.g., a bendable portion) extending from the first area 230a and supported by a bendable member (e.g., the bendable member 260 of FIG. 4). In some embodiments, the first area 230a may be arranged to be supported by a flat surface and a curved surface extending from the flat surface of the slide bracket 250. According to an embodiment, when the electronic device 200 is in the slide-in state, the second area 230b of the flexible display 230 may be slid into the inner space of the housing 210 and disposed not to be exposed to the outside, and when the electronic device 200 is in the slide-out state, the second area 230b may be exposed to the outside by extending from the first area 231 while being supported by the bendable member (e.g., the bendable member 260 of FIG. 4). Therefore, the electronic device 200 may include a rollable type and/or slidable type electronic device in which the area of the display screen of the flexible display 230 changes depending on the movement of the slide bracket 250 from the housing 210.

According to various embodiments, the slide bracket 250 may be coupled to be movable in a sliding manner so as to be at least partially slid into or slid out from the housing 210. For example, the electronic device 200 may be configured to have a first width w1 from the second side surface 2102 to the fourth side surface 2104 in the slide-in state. According to an embodiment, in the slide-in state, the electronic device 200 may be operated to have a third width w3 greater than the first width w1 by causing the bendable member (e.g., the bendable member 260 of FIG. 4) slid into the housing 210 in a predetermined direction (e.g., the X-axis direction) to have an additional second width w2.

According to various embodiments, the slide bracket 250 may be operated through a user's manipulation. For example, in the electronic device 200, the slide bracket 250 may be automatically slid out in a predetermined direction (e.g., the x-axis direction) by pushing a button 292 of a locker 290 exposed to the outside. In this case, when the slide bracket 250 is pressed in a predetermined direction (e.g., the -x axis direction), the slide bracket 250 may be controlled to maintain the slide-in state through the locker 290 while holding a restoring force to be slid out. In some embodiments, the electronic device 200 may be shifted to the slide-in state or the slide-out state through a user's manipulation of pressing the outer surface of the flexible display 230 in a predetermined direction. In some embodiments, the slide bracket 250 may be automatically operated by a driving mechanism (e.g., a driving motor, a reduction gear module, and/or a gear assembly) disposed in the inner space of the housing 210. According to an embodiment, the electronic device 200 may be configured to control the operation of the slide bracket 250 via the driving mechanism when an event for shifting to the slide-in/slide-out state of the electronic device 200 is detected via a processor (e.g., the processor 120 in FIG. 1). In some embodiments, the processor (e.g., the processor 120 of FIG. 1) of the electronic device 200 may display objects in various ways and may perform control to execute an application to correspond to the changed display area of the flexible display 230 according to a slide-in state, a slide-out state, or an intermediate state.

According to various embodiments, the electronic device 200 may include at least one of an input device 203, sound output devices 206 and 207, sensor modules 204 and 217, camera modules 205 and 216, a connector port 208, a key input device (not illustrated), or an indicator (not illustrated). As another embodiment, in the electronic device 200, at least one of the above-mentioned components may be omitted, or other components may be additionally included.

According to various embodiments, the input device 203 may include a microphone. In some embodiments, the input device 203 may include a plurality of microphones arranged to detect the direction of sound. The sound output devices 206 and 207 may include speakers. The sound output devices 206 and 207 may include an external speaker 206 and a phone call receiver 207. As another embodiment, the sound output devices 206 and 207 may include a speaker that is operated without a separate speaker hole (e.g., a piezo speaker).

According to various embodiments, the sensor modules 204 and 217 may generate electrical signals or data values corresponding to the internal operating state of the electronic device 200 or an external environmental state. The sensor modules 204 and 217 may include, for example, a first sensor module 204 (e.g., a proximity sensor or an illuminance sensor) disposed on the front surface 210a of the electronic device 200 and/or a second sensor module 217 (e.g., an HRM sensor) disposed on the rear surface 210b. According to an embodiment, the first sensor module 204 may be disposed under the flexible display 230 in the front surface 210a of the electronic device 200. According to an embodiment, the first sensor module 204 may further include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera devices 205 and 216 may include a first camera device 205 disposed on the front surface 210a of the electronic device 200 and a second camera device 216 disposed on the rear surface 210b. According to an embodiment, the electronic device 200 may include a flash 218 located in the vicinity of the second camera device 216. According to an embodiment, the camera devices 205 and 216 may include one or more lenses, an image sensor, and/or an image signal processor. According to an embodiment, the first camera device 205 may be disposed under the flexible display 230, and may be configured to photograph a subject through a portion of an active area of the flexible display 230. According to an embodiment, the flash 218 may include, for example, a light-emitting diode or a xenon lamp.

According to various embodiments, the electronic device 200 may include at least one antenna (not illustrated). According to an embodiment, the at least one antenna may wirelessly communicate with, for example, an external electronic device (e.g., the electronic device 104 in FIG. 1), or may wirelessly transmit/receive power required for charging. According to an embodiment, the antenna may include a legacy antenna, a mmWave antenna, a near-field communication (NFC) antenna, a wireless charging antenna, and/or a magnetic secure transmission (MST) antenna.

According to various embodiments, at least a portion of the housing 210 (e.g., the side surface members 248 and 249 of FIG. 4) may be at least partially made of a conductive material (e.g., a metal material). According to an embodiment, in the housing 210, side surface members (e.g., the side surface members 248 and 249 in FIG. 4) disposed on at least the first side surface 2101 and/or the third side surface 2103, which are not involved in driving the slide bracket 250, may be made of a conductive material and may be divided into a plurality of conductive portions (not illustrated) electrically insulated by a non-conductive material. According to an embodiment, the plurality of conductive portions may be electrically connected to a wireless communication circuit (e.g., the wireless communication module 192 of FIG. 1) disposed inside the electronic device 200, thereby being used as antennas operating in various frequency bands.

According to various embodiments of the disclosure, since the electronic device 200 is provided with a tension-maintaining structure that always pulls opposite ends of the flexible display 230 with a constant force, lifting is prevented through even stress distribution even when a slide-in/slide-out operation is performed. This may help improve surface quality and provide reliable operation convenience.

FIG. 4 is an exploded perspective view of an electronic device according to various embodiments of the disclosure.

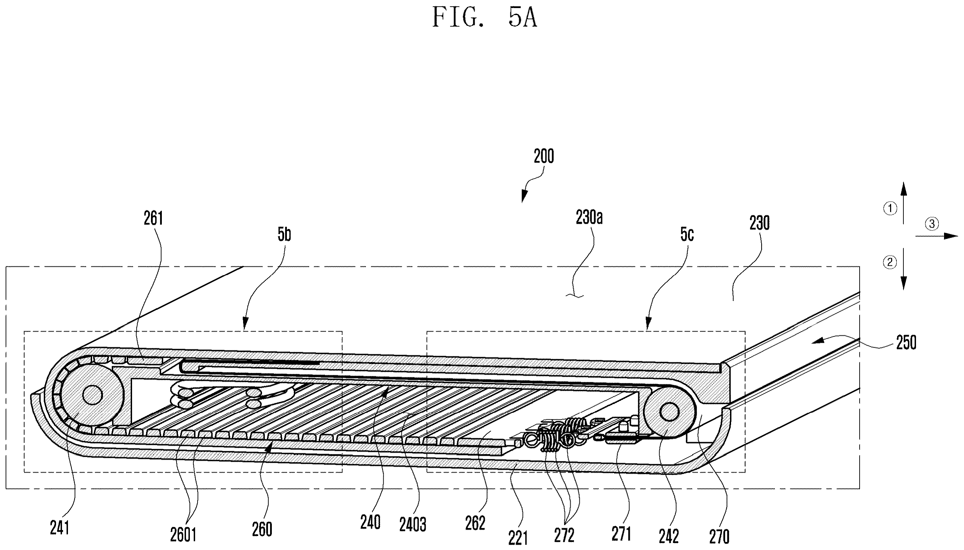

Referring to FIG. 4, the electronic device 200 may include a base bracket 240 including at least one first roller 241 and at least one second roller 242 which are rotatably disposed, a slide bracket 250 coupled to the base bracket 240 to be slidable by a predetermined reciprocating distance, a bendable member 260 disposed to move together with the slide bracket 250, a flexible display 230 disposed to be supported by the slide bracket 250 and the bendable member 260, at least one tension belt 270 having one end fixed to the slide bracket 250 and the other end fixed to the bendable member 260 to provide a certain tension to the flexible display 230, a cover member 221 (e.g., a rear surface cover) fixed to at least a portion of the base bracket 240, and one or more side surface members 248 and 249 surrounding at least a portion of a first space (e.g., the first space 2403 of FIG. 5A) between the base bracket 240 and the cover member 221. According to an embodiment, in the electronic device 200, a housing structure (e.g., the housing 210) including a first space (e.g., the first space 2403) may be configured with the base bracket 240, the cover member 221, and the one or more side surface members 248 and 249. According to an embodiment, the electronic device 200 may include various electronic components (an electronic function group) such as a battery 321 and a substrate 320 disposed in a first space (e.g., the first space 2403 of FIG. 5A).

According to various embodiments, the base bracket 240 may include a structure 2405 configured to accommodate the slide bracket 250 to be slidable by a predetermined reciprocating distance. For example, the base bracket 240 may include at least one guide rib, and the slide bracket 250 may include a guide slit coupled to at least one guide rib. Accordingly, the slide bracket 250 may be slidably coupled to the base bracket 240 via the coupling structure of the guide rib and the guide slit. According to an embodiment, the at least one first roller 241 rotatably disposed on the base bracket 240 may support at least a portion of the bendable member 260 connected to the slide bracket 250 in a winding manner. According to an embodiment, the at least one second roller 242 rotatably disposed on the base bracket 240 and opposite to the at least one first roller may support at least a portion of the tension belt 270 in a winding manner. According to an embodiment, the base bracket 240 may be made of a metal material and/or a polymer.

According to various embodiments, the slide bracket 250 may be disposed to be slidable by a designated reciprocating distance via the base bracket 240. According to an embodiment, the slide bracket 250 may include a flat surface for supporting at least a portion of the flexible display 230.

According to an embodiment, when the electronic device 200 is in the slide-in state (e.g., the state of FIGS. 2A and 3A) through the sliding motion of the slide bracket 250, the bendable member 260 may guide at least a portion of the flexible display 230 (e.g., the second area 230b of FIG. 2B) to be accommodated in the first space (e.g., the first space 2403 of FIG. 5A) and thus to be disposed to be invisible from the outside. In this case, the flexible display 230 may have a first display area visible from the outside. According to an embodiment, when the electronic device 200 is in the slide-out state (e.g., the state of FIGS. 2B and 3B) through the sliding motion of the slide bracket 250, the bendable member 260 may be disposed such that at least a portion (e.g., the second area 230b of FIG. 2B) of the flexible display 230 is exposed to the outside. For example, when the electronic device 200 is in the slide-out state (e.g., the state of FIGS. 2B and 3B) through the sliding motion of the slide bracket 250, the bendable member 260 may guide at least a portion (e.g., the second area 230b of FIG. 2B) of the flexible display 230 to form the same flat surface and/or curved surface as the slide bracket 250 and thus to be disposed to be visible from the outside. In this case, the flexible display 230 may have a second display area that is larger than the first display area visible from the outside. According to an embodiment, the bendable member 260 may be assembled such that a plurality of unit bars (e.g., the multiple bars 2601 in FIG. 5A) are rotatable relative to each other, through the first roller 241, whereby the bendable member 260 may be guided to be bent with a predetermined radius of curvature by the first roller 241.

According to various embodiments, the one or more side surface members 248 and 249 may include a first side surface member 248 and a second side surface member 249 disposed to close at least a portion of a first space (e.g., the first space 2403 of FIG. 5A) defined by the base bracket 240 and the cover member 221, for example, one side (e.g., the first side surface 2101 of FIG. 2A) of the base bracket 240 and the other side (e.g., the third side surface 2103 of FIG. 2A) opposite to the one side. In some embodiments, the electronic device 200 may include a first side surface cover 211 and a second side surface cover 212 additionally disposed on the first side surface member 248 and the second side surface member 249. According to an embodiment, the first side surface member 248 and/or the second side surface member 249 may be made of a conductive member (e.g., a metal material), and may include one or more conductive portions split by one or more non-conductive portions (e.g., polymer). According to an embodiment, the conductive portions may be electrically connected to a wireless communication circuit (e.g., the wireless communication module 192 of FIG. 1) of the electronic device 200, and may thus be used as antennas operating in a specific frequency band (e.g., a legacy band and/or a sub-6 band). In such a case, the first side surface cover 211 and/or the second side surface cover 212 may help form a beautiful appearance of the electronic device 200 by covering split portions (not illustrated) in the first side surface member 248 and/or the second side surface member 249 to be invisible from the outside.

According to various embodiments, the tension belt 270 may be made of a material having a predetermined elasticity such as rubber, urethane, or silicone. In some embodiments, the tension belt 270 may be made of a thin metal material. According to an embodiment, one end of the tension belt 270 may be fixed to the slide bracket 250. According to an embodiment, the other end of the tension belt 270 may be fixed to an end of the bendable member 260. In this case, the tension belt 270 and the bendable member 260 may be connected to each other via at least one first elastic member 272 as an elastic means. For example, the at least one first elastic member 272 may have opposite ends fixed to the belt bracket 271 fixed to the end of the tension belt 270 and an end of the bendable member 260, respectively, and may provide a mutually pulling force to the tension belt 270 and the bendable members 260. The first elastic member 272 includes a tension coil spring. However, the disclosure is not limited thereto, and the first elastic member 272 may be replaced with various known elastic members capable of providing a mutually pulling force to the tension belt 270 and the bendable member 260. According to an embodiment, since the tension belt 270 is arranged to pull opposite ends of the slide structure configured with the slide bracket 250 and the bendable member 260 with a predetermined tension via the first elastic member 272, a uniform stress distribution according to the slide-in/slide-out operation may be induced in the flexible display 230 fixed to be supported by the slide structure, thereby preventing a phenomenon such as lifting, which may help improve surface quality.

According to various embodiments, the electronic device 200 may include a second elastic member 245 as an elastic means that is disposed between the base bracket 240 and the slide bracket 250 to always press the slide bracket 250 into the slide-out state of the electronic device 200. According to an embodiment, the second elastic member 245 may be supported by the base bracket 240 by being fixed to the base bracket 240 at one end and being fixed to the slide bracket 250 at the other end, and may include at least one torsion spring for pressing the slide bracket 250 into the slide-out state of the electronic device 200. However, the disclosure is not limited thereto, and the second elastic member 245 may be replaced with various known elastic members for pressing the slide bracket 250 into the slide-out state of the electronic device 200. According to an embodiment, the electronic device 200 may include a locker 290 as a means of controlling the slide bracket 250 to maintain the slide-in state. According to an embodiment, the locker 290 may be exposed to the outside through at least one side surface member 248 or 249. In some embodiments, when the electronic device 200 is provided with the at least one side surface cover 211 or 212, the locker 290 may be partially exposed to the outside through the at least one side surface cover 211 or 212. Therefore, in the slide-in state, when the button (e.g., the button 292 of FIG. 2A) of the locker 290 exposed to the outside is pressed, the slide bracket 250 is automatically operated by the restoring force of the second elastic member 245, whereby the electronic device 200 may be shifted to the slide-out state. According to an embodiment, the locker 290 may control the slide bracket 250 such that the slide bracket 250 continuously maintains the slide-in state without being arbitrarily shifted to the slide-out state of the electronic device 200 when the slide-out state is shifted to the slide-out state by a user's manipulation. According to an embodiment, the locker 290 may be exposed to the outside through the first side surface member 248 or exposed to the outside through the second side surface member 249.

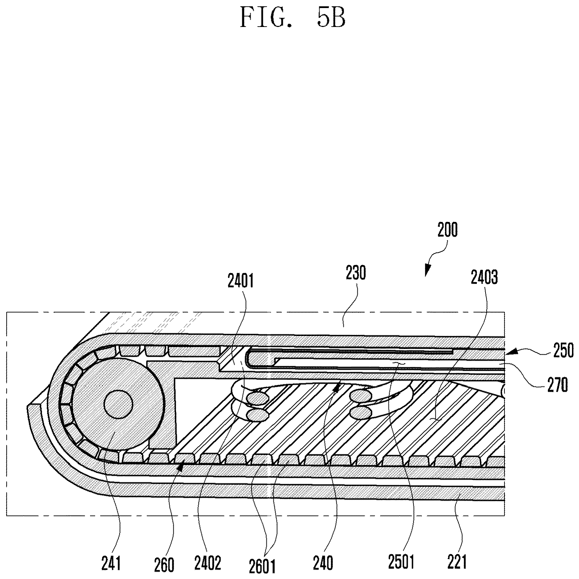

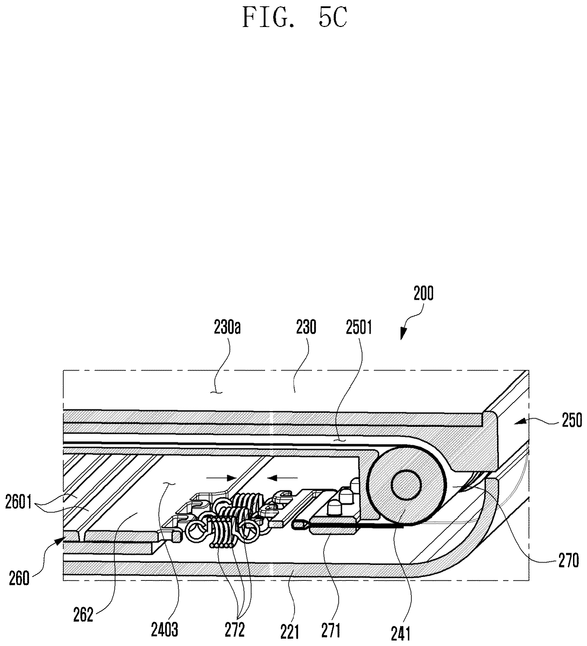

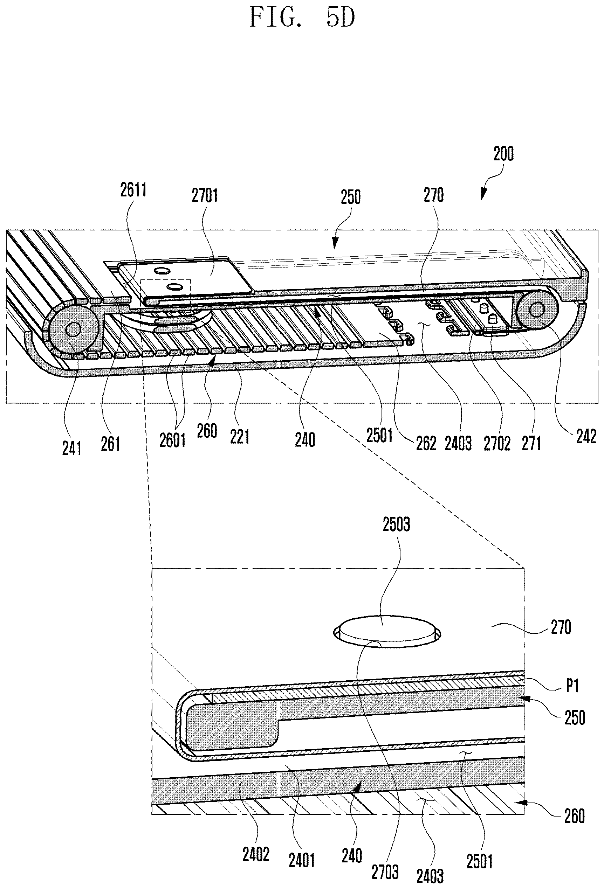

FIG. 5A is a cross-sectional view of the electronic device taken along line 5a-5a of FIG. 2A according to various embodiments of the disclosure. FIG. 5B is an enlarged view of area 5b of FIG. 5A according to various embodiments of the disclosure. FIG. 5C is an enlarged view of area 5c of FIG. 5A according to various embodiments of the disclosure. FIG. 5D is a cross-sectional view of the electronic device illustrating the state in which the tension belt is fixed to the slide bracket according to various embodiments of the disclosure.

Referring to FIGS. 5A to 5D, the electronic device 200 may include a base bracket 240 including a first surface oriented in a first direction (direction ①) and a second surface 2402 oriented in a second direction (direction ②) opposite to the first surface 2401, a cover member 221 disposed to face the second surface 2402 of the base bracket 240 and to provide a first space 2403, a slide bracket 250 disposed on the base bracket 240 to correspond to the first surface 2401 of the base bracket 240 and to be slidable in a third direction (direction ③) perpendicular to the first direction (direction ①), a bendable member 260 connected to an end of the slide bracket 250 and disposed to be supported by a first roller 241 rotatably disposed on the base bracket 240, and a tension belt 270 elastically interconnecting the bendable member 260 and the slide bracket 250. According to an embodiment, at least a portion of the tension belt 270 may be disposed to be supported by the second roller 242 rotatably disposed on the base bracket 240 at a position opposite to the first roller 241. According to an embodiment, the tension belt 270 may be disposed to be fixed to the slide bracket 250 at one end 2701 and elastically fixed to the bendable member 260 at the other end 2702 via the first elastic member 272.

According to various embodiments, the bendable member 260 may include multiple bars 2601 connected to each other to be rotatable relative to each other, a first support plate 261 connected to a plurality of unit bars disposed at one end among the multiple bars 2601, and a second support plate 262 connected to a plurality of unit bars disposed at the other end among the multiple bars 2601. According to an embodiment, since the first support plate 261 is fixed to an end of the slide bracket 250, the bendable member 260 may be operated by interlocking with the slide bracket 250. According to an embodiment, the bendable member 260 may be disposed such that the second support plate 262 is elastically connected to the tension belt 270. For example, the second support plate 262 may be elastically connected to the belt bracket 271 fixed to the other end 2702 of the tension belt 270 via the first elastic member 272. According to an embodiment, the first elastic member 272 may be elastically arranged to provide a mutually pulling force to the bendable member 260 supported by the first roller 241 and the tension belt 270 supported by the second roller 242 (e.g., to provide a force pulling to the directions indicated by arrows in FIG. 5C).

According to various embodiments, the tension belt 270 and the bendable member 260 may be elastically connected to each other via the first elastic member 272 in the first space 2403 between the base bracket 240 and the cover member 221. According to an embodiment, at least a portion of the tension belt 270 may be guided along the second space 2501 provided between the first surface 2401 of the base bracket 240 and the slide bracket 250, and one end 2701 of the tension belt 270 may be bypassed to a surface facing the flexible display 230 through an opening 2611 provided in the slide bracket 250 and then fixed thereto. According to an embodiment, the tension belt 270 may be fixed to the slide bracket 250 by inserting a fixing protrusion 2503 provided at a corresponding position of the slide bracket 250 into at least one fixing hole 2703 provided at one end of the tension belt 270. According to an embodiment, the tension belt 270 may be fixed to have a height consistent with the outer surface of the slide bracket 250. According to an embodiment, the one end 2701 of the tension belt 270 may be fixed to the slide bracket 250 via an adhesive member P.

According to various embodiments, in the slide-in state, at least a portion of the flexible display 230 (e.g., the second area 230b of FIG. 2A) of the electronic device 200 may be accommodated in the first space 2403 while being guided by the bendable member 260. In this case, since the first elastic member 272 provides a mutually pulling force to the second support plate 262 of the bendable member 260 and the belt bracket 271 of the tension belt 270, the flexible display 230 may always be provided with a uniform tension.

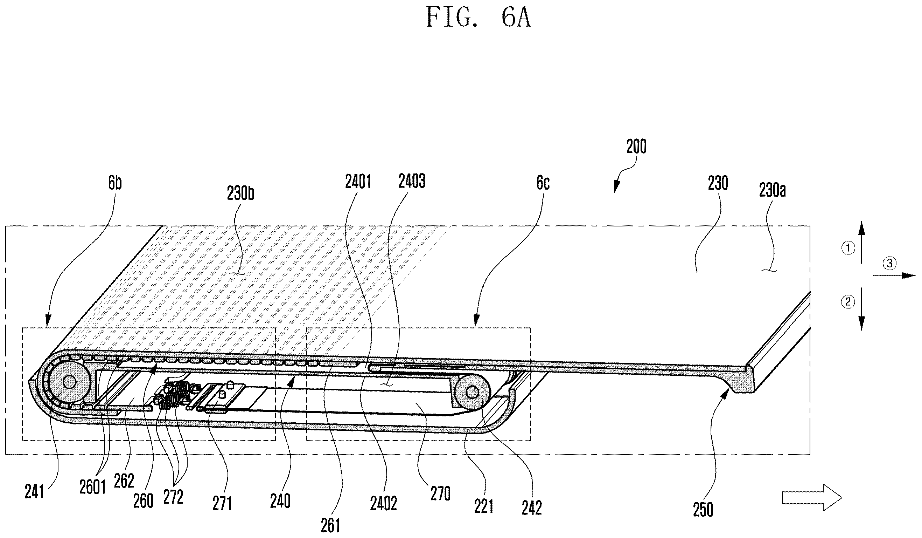

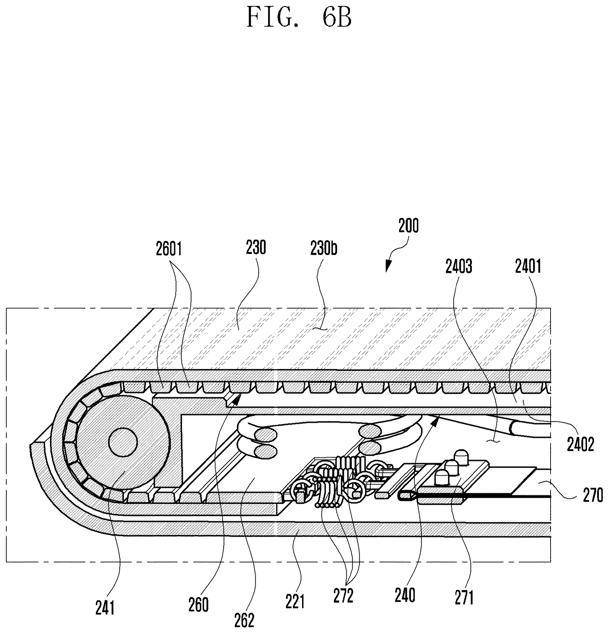

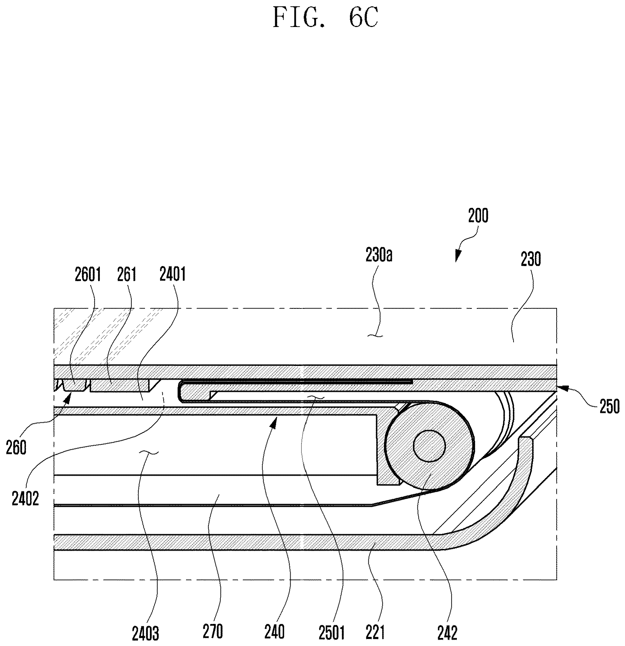

FIG. 6A is a cross-sectional view of an electronic device taken along line 6a-6a of FIG. 2B according to various embodiments of the disclosure. FIG. 6B is an enlarged view of area 6b of FIG. 6A according to various embodiments of the disclosure. FIG. 6C is an enlarged view of area 6c of FIG. 6A according to various embodiments of the disclosure.

Referring to FIGS. 6A to 6C, in the state in which the slide bracket 250 is moved in the third direction (direction ③) (e.g., the slide-out state), the display area of the flexible display 230 may be expanded, so that the second area 230b supported by the bendable member 260 is moved from the first space 2403 to the outside of the electronic device 200 and forms the same plane as the first area 230a. In this case, the bendable member 260 may be moved to at least partially form the same plane as the slide bracket 250 while being supported by the first roller 241. According to an embodiment, according to the movement of the second support plate 262 of the bendable member 260, the tension belt 270 may be moved therewith while being supported by the second roller 242.

According to an exemplary embodiment of the disclosure, during a shifting operation from the slide-in state to the slide-out state or during a shifting operation from the slide-out state to the slide-in state, the flexible display 230 fixed to the slide bracket 250 and the bendable member 260 may provide lifting-free excellent surface quality and convenience of operation through a closed-loop-type tension-maintaining structure via the slide bracket 250, the bendable member 260, the first elastic member 272, and the tension belt 270.

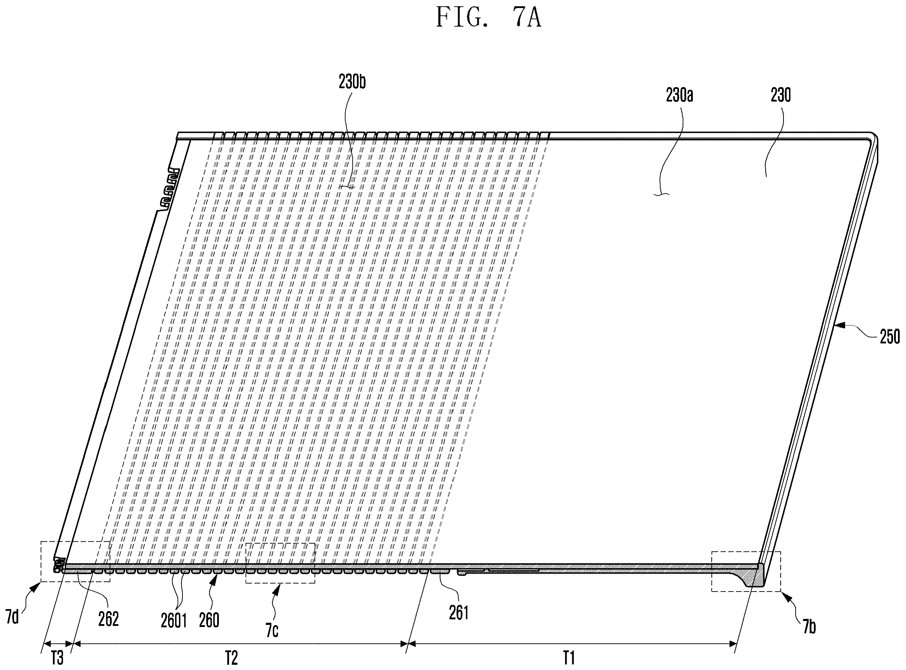

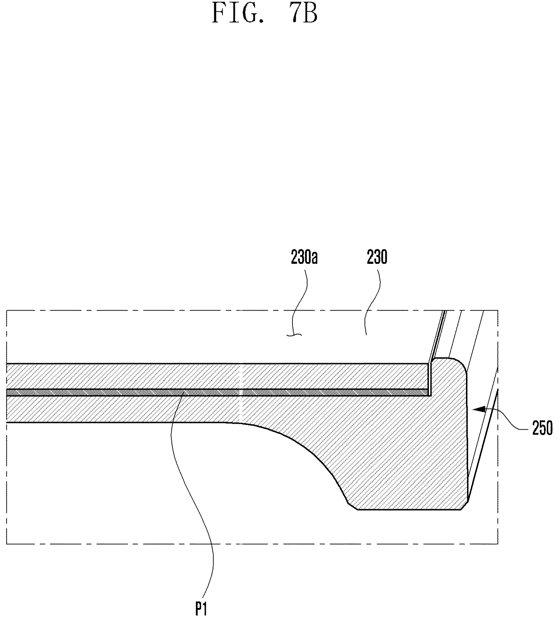

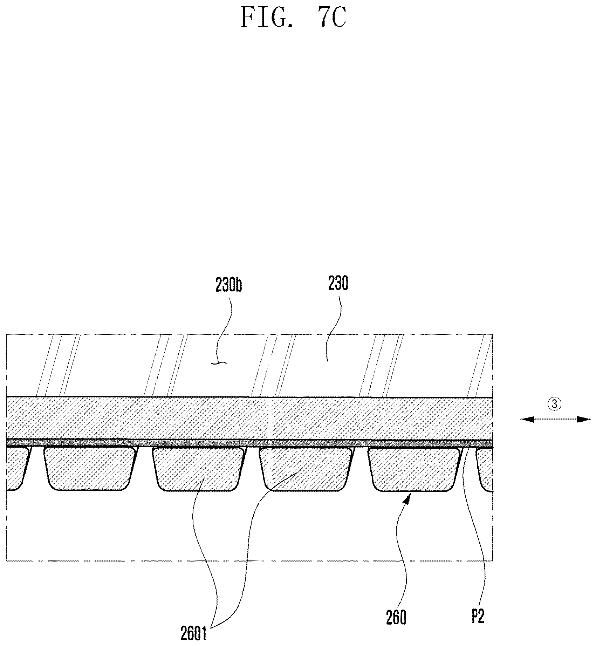

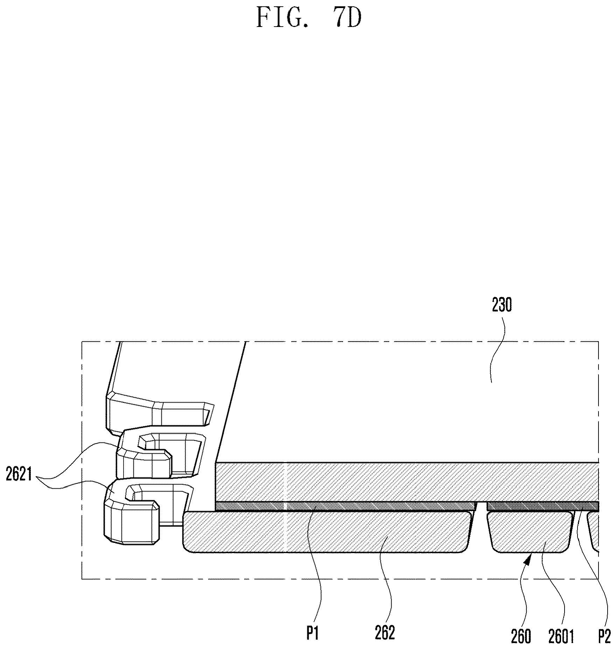

FIG. 7A is a perspective view illustrating a state in which a flexible display according to various embodiments of the disclosure is fixed to the slide bracket and the bendable member. FIG. 7B is an enlarged view of area 7b of FIG. 7A according to various embodiments of the disclosure. FIG. 7C is an enlarged view of area 7c of FIG. 7A according to various embodiments of the disclosure. FIG. 7D is an enlarged view of area 7d of FIG. 7A according to various embodiments of the disclosure.

Referring to FIGS. 7A to 7D, the flexible display 230 may be preferentially attached to the slide bracket 250 and the bendable member 260 supporting the flexible display 230 before being assembled to the electronic device 200. This is because the bending characteristic of at least a portion of the flexible display 230 should be taken into consideration during the slide-in/slide-out operation. According to an embodiment, the flexible display 230 may be fixed to the slide bracket 250 and the bendable member 260 via adhesive members P1 and P2. According to an embodiment, the first area 230a of the flexible display 230 may be fixed to the slide bracket 250. According to an embodiment, the second area 230b of the flexible display 230 may be fixed to the bendable member 260. According to an embodiment, in a first section T1, the flexible display 230 may be attached to the slide bracket 250 and the first support plate 261 via a first adhesive member P1 having a first adhesive property. According to an embodiment, in a second section T2, the flexible display 230 may be attached to the multiple bars 2601 of the bendable member 260 via a second adhesive member P2 having a second adhesive property. According to an embodiment, in a third section T3, the flexible display 230 may be attached to the second support plate 262 of the bendable member 260 via the first adhesive member P1 having the first adhesive property.

According to various embodiments, the first adhesive property of the first adhesive member P1 and the second adhesive property of the second adhesive member P2 may be different from each other. According to an embodiment, the first area 230a of the flexible display 230, the first adhesive member P1 may have the first adhesive property for firmly fixing objects to be attached in the first section T1 in which the slide bracket 250 and the first support plate 261 are attached to each other and in the third section T3 in which the flexible display 230 and the second support plate 262 are attached to each other. According to one embodiment, in order to accommodate the bending operation of the bendable member 260, the second adhesive member P2 disposed between the second area 230b of the flexible display 230 and the bendable member 260 corresponding thereto may slip in a direction parallel to an arrangement direction of the bendable member 260 and may have the second adhesive property, which is softer than the first adhesive property. According to an embodiment, the flexible display 230 may be attached to the slide bracket 250 and the bendable member 260 through bonding or taping.

According to various embodiments, according to an embodiment, the adhesive property of an adhesive member (e.g., the adhesive member P in FIG. 5D) for fixing the tension belt 270 to the slide bracket 250 may be substantially the same as the first adhesive property of the adhesive member P1.

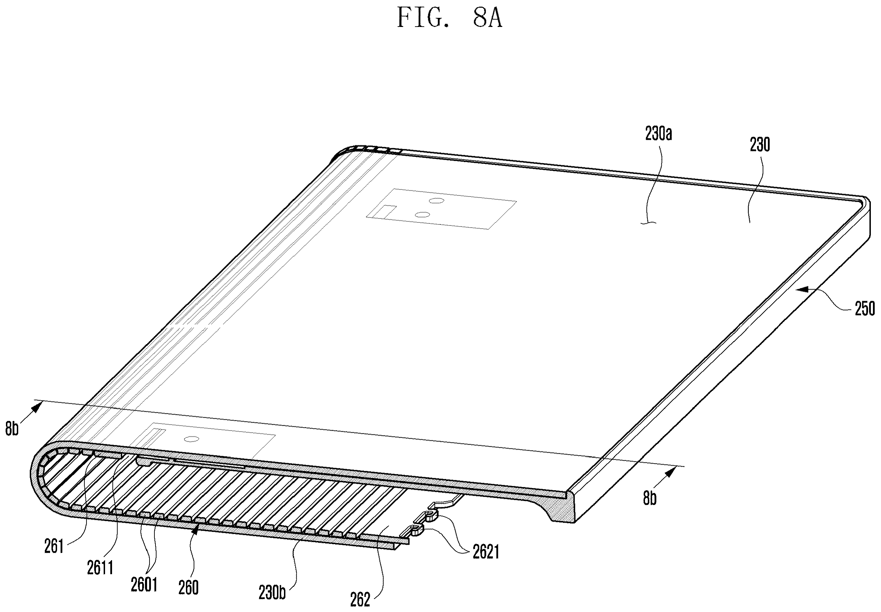

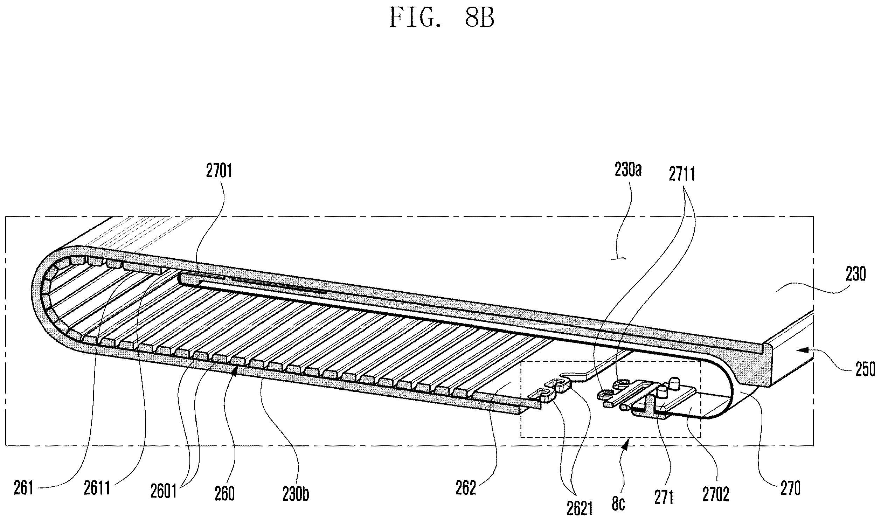

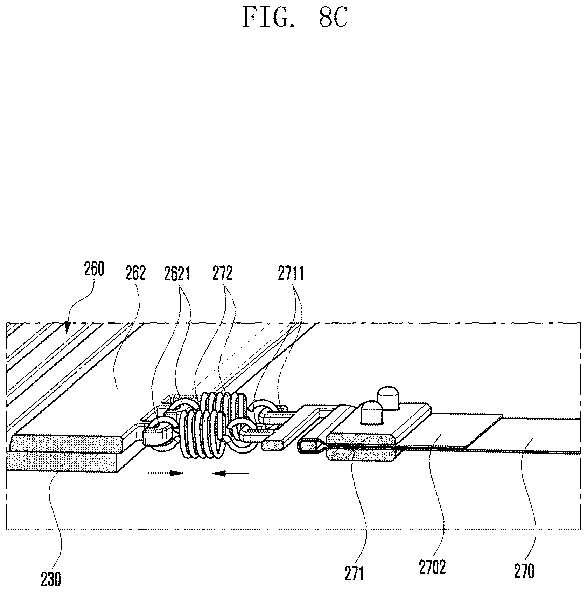

FIG. 8A is a perspective view illustrating a state in which a flexible display according to various embodiments of the disclosure is fixed to the slide bracket and the bendable member. FIG. 8B is a cross-sectional view of the electronic device according to various embodiments of the disclosure taken along line 8b-8b in FIG. 8A. FIG. 8C is an enlarged view illustrating a state in which a first elastic member is applied to area 8c of FIG. 8B according to various embodiments of the disclosure.

Referring to FIGS. 8A to 8C, the flexible display 230 may be attached to the slide bracket 250 and the bendable member 260. According to an embodiment, the first area 230a of the flexible display 230 may be fixed to the slide bracket 250. According to an embodiment, the second area 230b of the flexible display 230 may be fixed to the bendable member 260. According to an embodiment, the bendable member 260 may include multiple bars 2601 connected to each other to be rotatable relative to each other, a first support plate 261 connected to a plurality of unit bars disposed at one end among the multiple bars 2601, and a second support plate 262 connected to a plurality of unit bars disposed at the other end among the multiple bars 2601. According to an embodiment, since the first support plate 261 is fixed to an end of the slide bracket 250, the bendable member 260 may be operated interlocking with the slide bracket 250. According to an embodiment, the bendable member 260 may be disposed such that the second support plate 262 is elastically connected to the tension belt 270. According to an embodiment, the second support plate 262 may be elastically connected to the belt bracket 271 fixed to the other end 2702 of the tension belt 270 via the first elastic member 272. According to an embodiment, the first elastic member 272 may be elastically arranged to provide a mutually pulling force to the bendable member 260 supported by the first roller 241 and the tension belt 270 supported by the second roller 242 (e.g., to provide a force pulling to the directions indicated by arrows in FIG. 8C). According to an embodiment, the elastic member 270 may be fixed by a first connection ring 2711 provided on the belt bracket 271 and a second connection ring 2621 provided on the second support plate 262. According to an embodiment, the first connection ring 2711 and the second connection ring 2621 may be provided in a shape that allows the first elastic member 272, such as a tension coil spring, to be easily replaced.

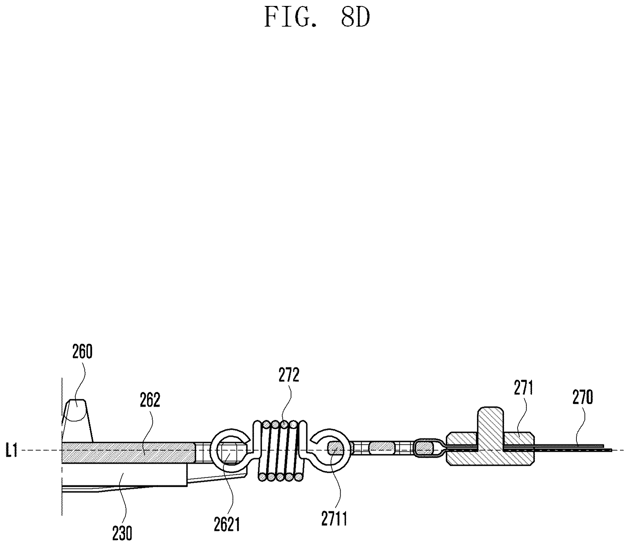

FIG. 8D is a partial configuration view illustrating an arrangement relationship among a bendable member, an elastic member, and a tension belt according to various embodiments of the disclosure.

Referring to FIG. 8D, the bendable member 260 may be disposed on the same straight line L1 as the tension belt 270 elastically connected via the first elastic member 272. For example, the second support plate 262 of the bendable member 260, the first elastic member 272, and the belt bracket 271 fixed to the tension belt 270 may be arranged on the same straight line L1. This is to prevent generation of unintended friction with surrounding components and/or a non-uniform stress distribution due to the inclination of the tension belt 270, which may be caused when the bendable member 260 and the tension belt 270, which are pulled left and right via the first elastic member 272, are not arranged on a straight line.

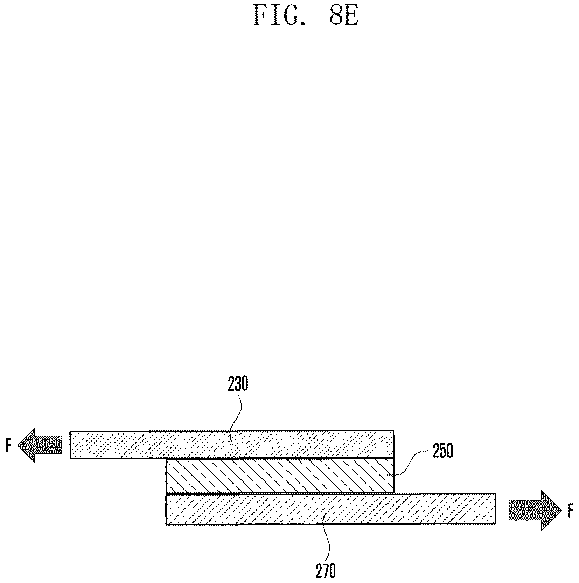

FIG. 8E is a view schematically illustrating a principle of tension F applied to a flexible display according to various embodiments of the disclosure.

Referring to FIG. 8E, the electronic device 200 may have a closed loop-type tension-maintaining structure by a slide bracket 250, a bendable member 260, a first elastic member 272, and a tension belt 270. Accordingly, since a force F of pulling opposite ends of the flexible display 230 in opposite directions is provided via the tension-maintaining structure, the electronic device 200 may provide lifting-free excellent surface quality and convenience of operation during the slide-in/slide-out operation.

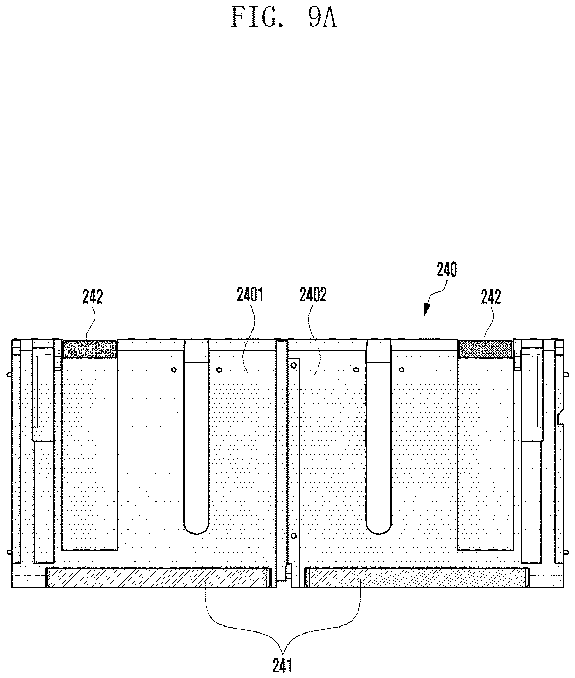

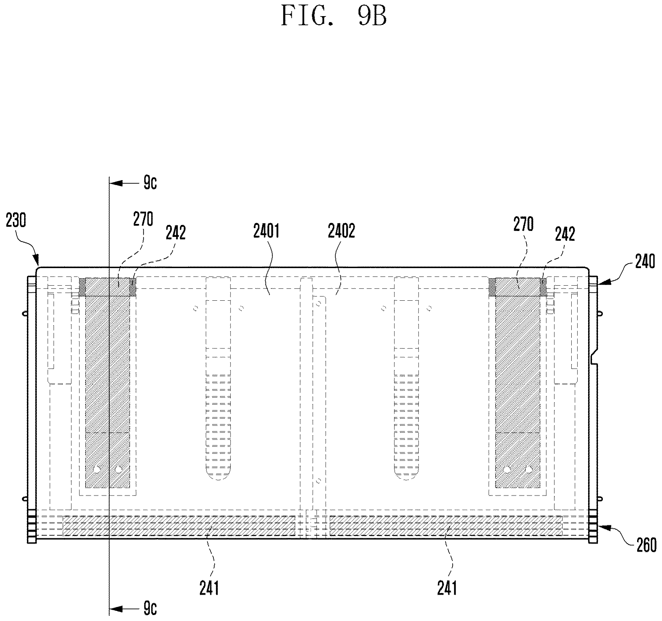

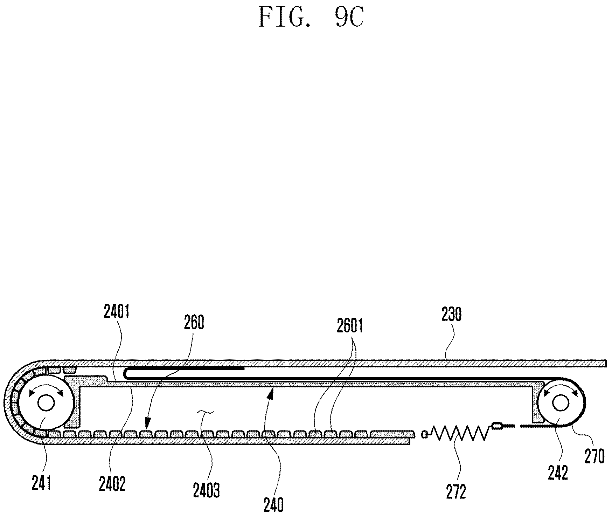

FIG. 9A is a view illustrating a configuration of a base bracket including a first roller and a second roller according to various embodiments of the disclosure. FIG. 9B is a view illustrating a state in which a flexible display is supported by a first roller and a second roller according to various embodiments of the disclosure. FIG. 9C is a cross-sectional view taken along line 9c-9c of FIG. 9B according to various embodiments of the disclosure.

Referring to FIGS. 9A to 9C, the base bracket 240 may include at least one first roller 241 rotatably disposed on one side and at least one second roller 241 rotatably disposed on the other side opposite to the one side. According to an embodiment, the at least one first roller 241 may be arranged to be rotated according to the movement of the bendable member 260, thereby supporting the bendable member 260 so that the bendable member 260 can be bent with a predetermined radius of curvature. According to an embodiment, the at least one second roller 242 may be arranged to rotate according to the movement of the tension belt 270. According to an embodiment, by arranging the first roller 241 and the second roller 242 to be spaced apart from each other by a predetermined interval via the base bracket 240, the tension belt 270 and the bendable member 260 may be prevented from being pushed inwardly by the elastic coupling of the tension belt 270 and the bendable member 260, and the first and second rollers may help reduce friction of the bendable member 260 and the tension belt 270 through self-rotation.

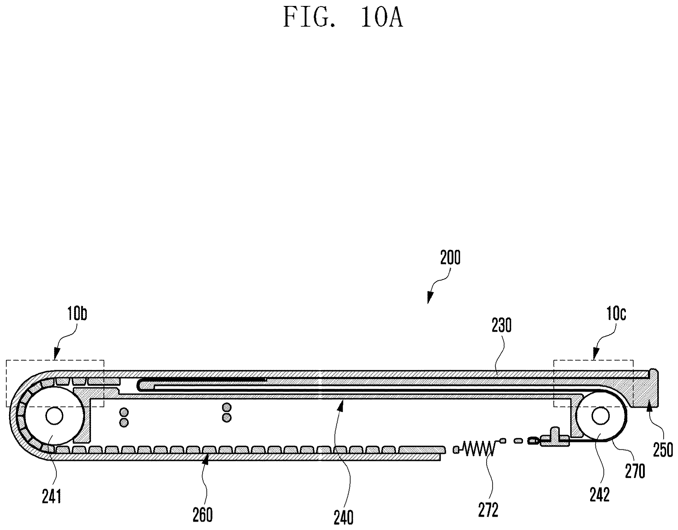

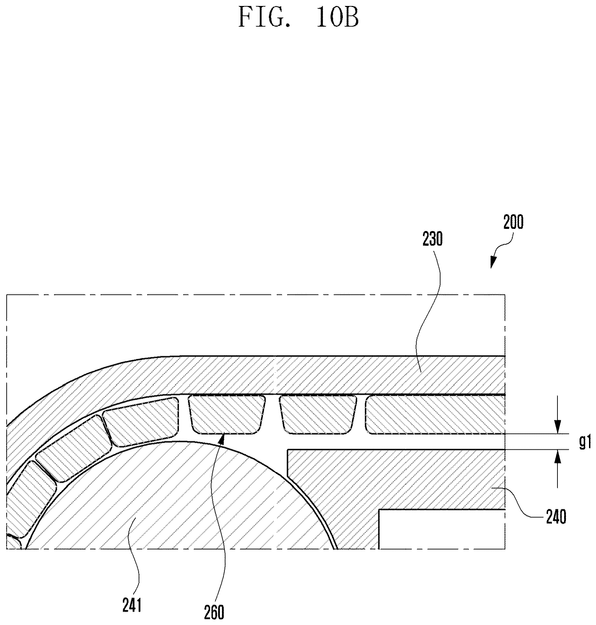

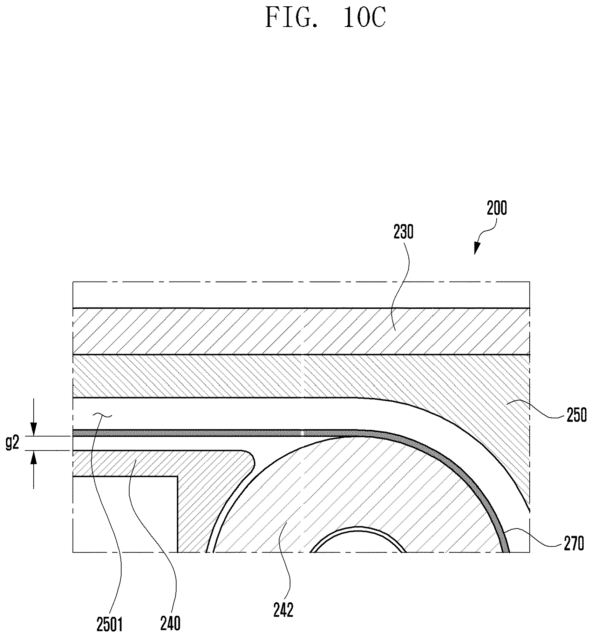

FIG. 10A is a cross-sectional view of an electronic device illustrating an arrangement relationship between a first roller and a second roller in a base bracket according to various embodiments of the disclosure. FIG. 10B is an enlarged view of area 10b of FIG. 10A according to various embodiments of the disclosure. FIG. 10C is an enlarged view of area 10c of FIG. 10A according to various embodiments of the disclosure.

Referring to FIGS. 10A to 10C, the electronic device 200 may further include a structure for preventing malfunction due to unnecessary contact with a surrounding structure (e.g., the first surface 2401 of the base bracket 240) when the bendable member 260 and the tension belt 270 move. For example, the first roller 241 supporting the bendable member 260 may be configured in a size having a first gap g1 (e.g., a first diameter) that prevents the bendable member 260 from coming into contact with the first surface 2401 of the base bracket 240. According to an embodiment, the second roller 242 supporting the tension belt 270 may be configured in a size having a gap g2 (e.g., a second diameter) that prevents the tension belt 270 from coming into contact with the first surface 2401 of the base bracket 240 in the second space 2501. According to an embodiment, the first gap g1 and the second gap g2 may be disposed on the same straight line. In some embodiments, the first gap g1 and the second gap g2 may be disposed on different straight lines.

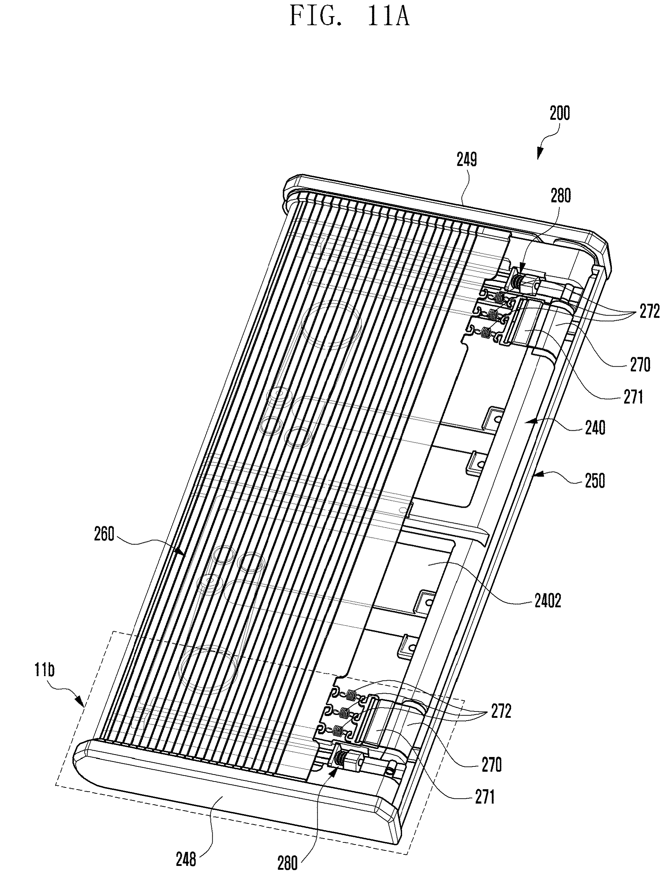

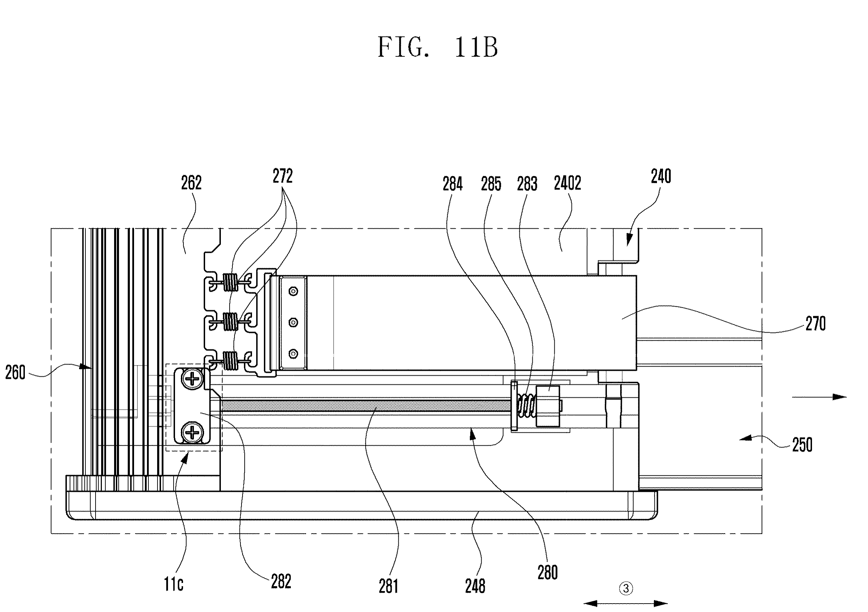

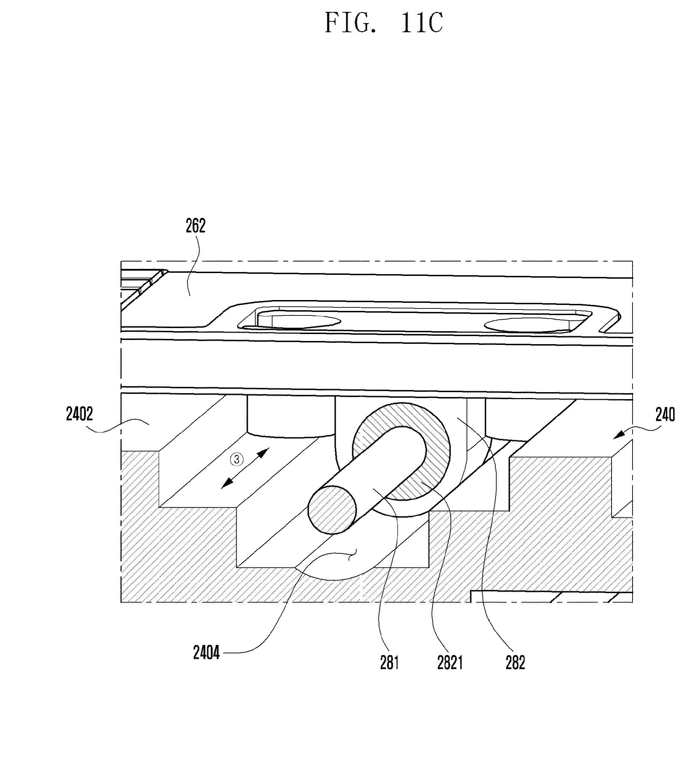

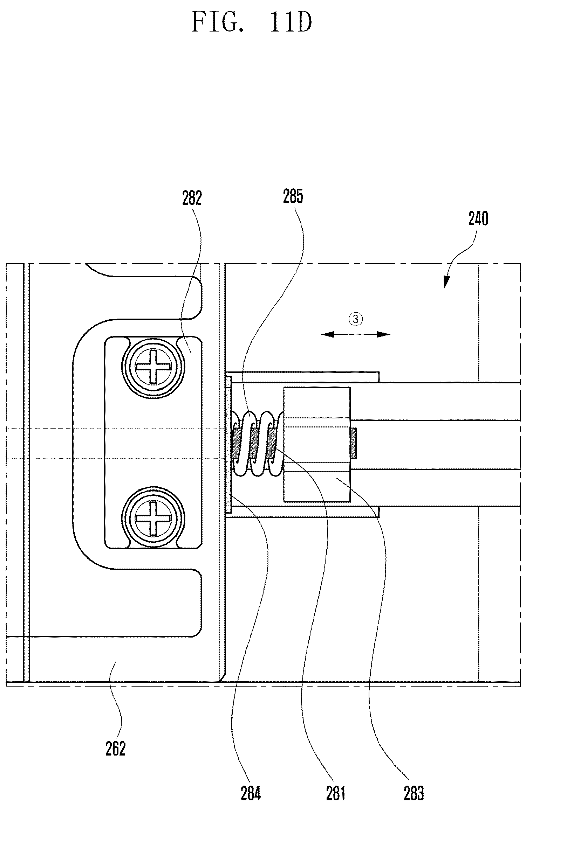

FIG. 11A is a view illustrating a portion of the rear surface of an electronic device including a guide structure according to various embodiments of the disclosure. FIG. 11B is an enlarged view of area 11b of FIG. 11A according to various embodiments of the disclosure. FIG. 11C is a partial perspective view illustrating an arrangement structure of area 11c of FIG. 11B according to various embodiments of the disclosure. FIG. 11D is a view illustrating a configuration of a main portion of a buffer structure included in a guide structure according to various embodiments of the disclosure.

Referring to FIGS. 11A to 11D, an electronic device 200 may include a guide structure 280 configured to guide a bendable member 260. According to an embodiment, the guide structure 280 may include a guide shaft 281 arranged to have a predetermined length along a direction parallel to the moving direction of a slide bracket 250 (e.g., the direction indicated by the arrow in FIG. 11B) on a second surface 2402 of a base bracket 240, and a bearing bracket 282 disposed on a second support plate 262 of a bendable member 260 and disposed to be penetrated by a guide shaft 281. According to an embodiment, since the bearing bracket 282 is moved along the guide shaft 281 to a predetermined direction when the bendable member 260 is moved, a uniform operating feeling of the slide bracket 250 may be provided to a user. According to an embodiment, the guide structure 280 may include at least one bearing 2821 interposed between the bearing bracket 282 and the guide shaft 281. According to an embodiment, the moving speed of the slide bracket 250 may be determined via the at least one bearing 2821.

According to various embodiments, the guide structure 280 may include a buffer structure configured to come into contact with the second support plate 262 of the bendable member 260 when the electronic device 200 is shifted from the slide-out state to the slide-in state. According to an embodiment, the buffer structure may include a supporter 283 disposed at an end of the guide shaft 281 on the second surface 2402 of the base bracket 240 and configured to support the guide shaft 281, a contact member 284 disposed to be penetrated by the guide shaft 281 to move only within a predetermined separation distance from the supporter 283, and a pressing member 285 supported by the supporter 283 at one end and configured to press the contact member 284 at the other end between the contact member 284 and the supporter 283. According to an embodiment, the pressing member 285 may include a compression coil spring disposed to be penetrated by the guide shaft 281. Accordingly, when the electronic device 200 is shifted from the slide-out state to the slide-in state, the second support plate 262 of the bendable member 260 comes into contact with the contact member 284, and the contact member 284 may provide a buffering action by being retracted while being pressed by the pressing member, which may help prevent the bendable member 260 from being damaged due to excessive movement and/or collision.

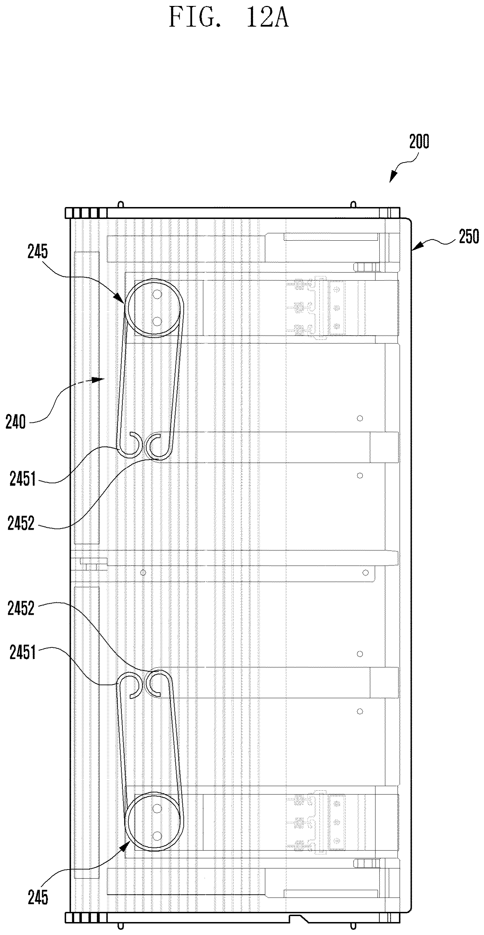

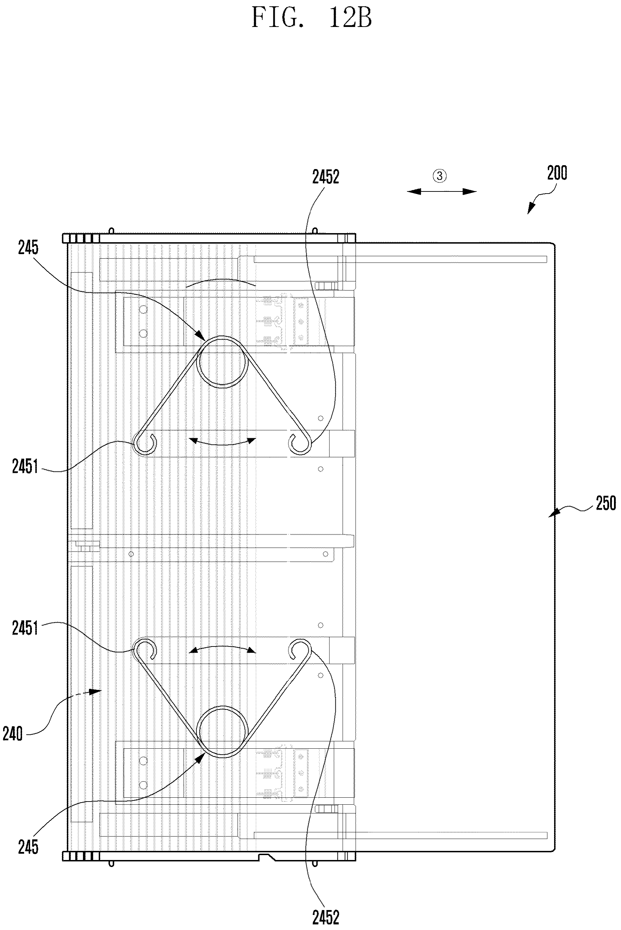

FIGS. 12A and 12B are operation views of an electronic device illustrating a state in which a slide bracket is slid in by second elastic members according to various embodiments of the disclosure and a state in which the slide bracket is slid out by the second elastic members, respectively.

Referring to FIGS. 12A and 12B, the electronic device 200 may include second elastic members 245 as elastic means that are disposed between a base bracket 240 and a slide bracket 250 to always press the slide bracket 250 into the slide-out state of the electronic device 200. According to an embodiment, each of the second elastic members 245 may be supported by the base bracket 240 by being fixed to the base bracket 240 at one end and being fixed to the slide bracket 250 at the other end, and may include at least one torsion spring for continuously pressing the slide bracket 250 into the slide-out state of the electronic device 200. According to an embodiment, it is illustrated that two second elastic members 245 are disposed at two locations in the electronic device 200, but a second elastic member(s) may be disposed at one location or at three or more locations.

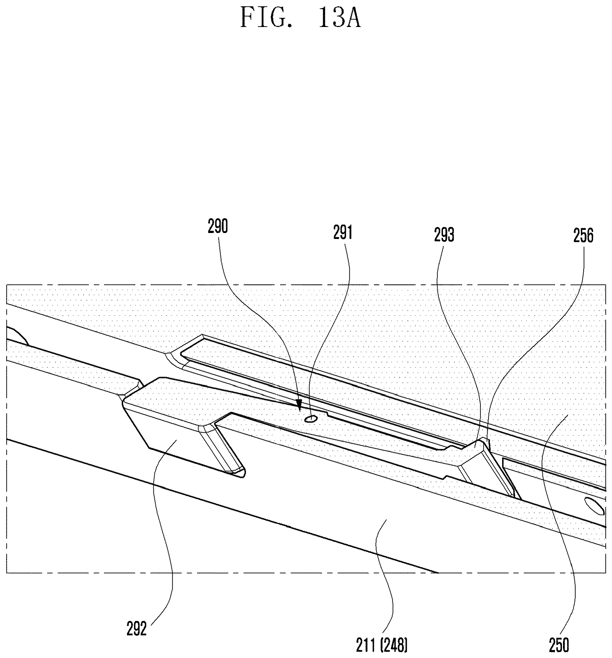

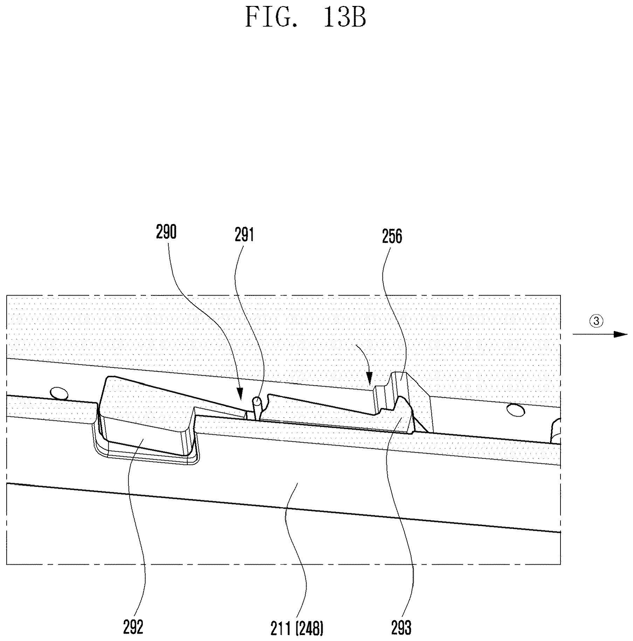

FIGS. 13A and 13B are views illustrating operational relationships between a slide bracket and a locker according to various embodiments of the disclosure in a slide-in state and a slide-out state, respectively.

Referring to FIGS. 13A and 13B, the electronic device 200 may include a locker 290 as a control means for maintaining the slide-in state of the slide bracket 250, which is always pressed in the slide-out direction via the aforementioned second elastic members 245. According to an embodiment, the locker 290 may be exposed to the outside through a side surface member 248. In some embodiments, when the side surface cover 211 is provided to the electronic device 200, the locker 290 may be disposed to be exposed to the outside through the side surface cover 211.

According to various embodiments, the locker 290 may include a rotation portion 291 rotatably disposed on a base bracket 240, a button 292 extending to one side of the rotation portion 291 and at least partially exposed to the outside of the electronic device 200, and an engagement portion 293 extending to the other side of the rotation portion 291 and selectively engaged with an engagement groove 256 provided at a corresponding position of the slide bracket 250. According to an embodiment, the rotation portion 291, the button 292, and/or the engagement portion 293 may be integrally configured. According to an embodiment, the engagement portion 293 may be configured to have a hook structure that is capable of being engaged with the engagement groove 256 of the slide bracket 250. Therefore, the locker 290 disposed on the base bracket 2400 may control the slide bracket 250 to maintain the slide-in state of the electronic device 200 by engaging the engagement portion with the engagement groove 256 provided in the slide bracket 250.

According to various embodiments, when the button 292 of the locker 290 exposed to the outside is pressed in the slide-in state, the electronic device 200 may be shifted to the slide-out state since the slide bracket 250 is automatically operated by the restoring force of the second elastic member (e.g., the second elastic member 245 of FIG. 12A). According to an embodiment, when the electronic device 200 is shifted to the slide-in state through a user's manipulation, the engagement portion 293 of the locker 290 is engaged with the engagement groove 256 of the slide bracket 250, which makes it possible to control the electronic device 200 to continuously maintain the slide-in state.

According to various embodiments, an electronic device (e.g., the electronic device 200 of FIG. 5A) may include a base bracket (e.g., the base bracket 240 of FIG. 5A) including a first surface (e.g., the first surface 2401 of FIG. 5B) and a second surface (e.g., the second surface 2402 of FIG. 5B) opposite to the first surface, and including at least one first roller (e.g., the first rollers 241 of FIG. 5A) and at least one second roller (e.g., the second rollers 242 of FIG. 5A), which are rotatably disposed at opposite ends, respectively, a cover member (e.g., the cover member 221 of FIG. 5A) coupled to the base bracket to correspond to the second surface so as to provide an inner space, a slide bracket (e.g., the slide bracket 250 of FIG. 5A) facing the first surface and coupled to the base bracket, a bendable member (e.g., the bendable member 260 of FIG. 5A) connected to an end of the slide bracket, at least partially supported by the at least one first roller, and arranged to be at least partially slid into the inner space through a sliding motion of the slide bracket, a flexible display (e.g., the flexible display 230 of FIG. 5A) including a first area (e.g., the first area 230a in FIG. 2B) fixed to the slide bracket and a second area (e.g., the second area 230b in FIG. 2B) extending from the first area and fixed to the bendable member, wherein, when the electronic device is shifted from the slide-in state to the slide-out state, at least a portion of the second area is exposed from the inner space to be visible to the outside, a tension belt (e.g., the tension belt 270 of FIG. 5A) wound around the at least one second roller to be at least partially supported, and having one end fixed to the slide bracket, and the other end fixed to the bendable member, and a first elastic member (e.g., the first elastic member 272 of FIG. 5A) interconnecting the tension belt and the bendable member such that the tension belt and the bendable member have a mutually pulling tensile force.

According to various embodiments, the bendable member may include multiple bars rotatably connected to each other, a first support plate coupled to a plurality of bars disposed at one end among the multiple bars, and a second support plate coupled to a plurality of bars disposed at the other end among the multiple bars, wherein the first support plate may be fixed to the slide bracket, and the second support plate may be elastically connected to the tension belt via the first elastic member.

According to various embodiments, the second support plate, the first elastic member, and the belt bracket may be disposed on the same line.

According to various embodiments, the first area of the flexible display may be attached to the slide bracket via a first adhesive member having a first adhesive property, and the second area of the flexible display may be attached to the bendable member via a second adhesive member having a second adhesive property.

According to various embodiments, the second adhesive member may provide an adhesive force that causes the second area of the flexible display to slip in a direction parallel to an arrangement direction of the bendable member by the second adhesive property.

According to various embodiments, a second space is provided between the slide bracket and the first surface of the base bracket, and the tension belt may be arranged to pass through the second space.

According to various embodiments, the at least one second roller may have a size that guides the tension belt through the second space not to come into contact with the first surface of the base bracket.

According to various embodiments, the at least one first roller may have a size that guides the bendable member not to come into contact with the first surface of the base bracket.

According to various embodiments, the electronic device may further include a guide structure configured to guide the slide bracket in the third direction. The guide structure may include a guide shaft disposed on the base bracket to have a predetermined length along the third direction, and a bearing bracket disposed on the second support plate and penetrated by the guide shaft. When the bendable member is moved, the bearing bracket may be guided in the third direction along the guide shaft.

According to various embodiments, the bearing bracket may include at least one bearing, and the moving speed of the slide bracket connected to the bendable member may be determined via the at least one bearing.

According to various embodiments, the electronic device may further include a buffer structure configured to come into contact with the second support structure when the slide bracket is shifted from the slide-out state to the slide-in state.

According to various embodiments, the buffer structure may include a supporter disposed at an end of the guide shaft in the base bracket, a contact member disposed to be penetrated by the guide shaft so as to move only within a predetermined separation distance from the supporter, and at least one pressing member configured to press the contact member toward the second support plate while being supported by the supporter.

According to various embodiments, the at least one pressing member may include a compression coil spring disposed between the supporter and the contact member to be penetrated by the guide shaft.

According to various embodiments, the electronic device may include a second elastic member, which is fixed to the base bracket at one end and fixed to the slide bracket at the other end, thereby providing a pressing force to press the slide bracket in the slide-out direction.

According to various embodiments, the second elastic member may include at least one torsion spring.

According to various embodiments, the electronic device may further include a locker disposed on the base bracket and configured to control the slide bracket to maintain the slide-in state of the slide bracket.

According to various embodiments, the locker may include a rotation portion rotatably disposed on the base bracket, a button extending to one side of the rotation portion and at least partially exposed to the outside of the electronic device, and an engagement portion extending to the other side of the rotation portion and having a hook structure configured to be selectively engaged with an engagement groove provided in the slide bracket.

According to various embodiments, the locker may be configured to control the slide bracket to maintain the slide-in state by engaging the engagement portion with the engagement groove.

According to various embodiments, an electronic device may include a housing including at least one first roller and at least one second roller, which are rotatably disposed at opposite ends thereof, respectively, a slide bracket disposed in the housing to be slidable by a predetermined reciprocating distance, a bendable member connected to an end of the slide bracket, at least partially supported by the first roller, and at least partially slid into an inner space of the housing through a sliding motion of the slide bracket, a flexible display including a first area fixed to the slide bracket and a second area extending from the first area and fixed to the bendable member, wherein the second area is exposed to be visible from the outside when the electronic device is shifted from a slide-in state to a slide-out state, a tension belt wound around the second roller to be at least partially supported, the tension belt being fixed to the slide bracket at one end and fixed to the bendable member at the other end, and an elastic member interconnecting the tension belt and the bendable member such that the tension belt and the bendable member have a mutually pulling tensile force. The flexible display may receive tension via the elastic member and the tension belt.

The embodiments of the disclosure disclosed in the specification and drawings are provided merely to propose specific examples in order to easily describe the technical features according to the embodiments of the disclosure and to help understanding of the embodiments of the disclosure, and are not intended to limit the scope of the embodiments of the disclosure.

## Claims

1. An electronic device (200) comprising:
a base bracket (240) comprising a first surface (2401) and a second surface (2402) opposite to the first surface (2401), and further comprising at least one first roller (241) and at least one second roller (242), which are rotatably disposed at opposite ends of the base bracket (240), respectively;
a cover member (221) coupled to the base bracket (240) to correspond to the second surface (2402) so as to provide an inner space (2403);
a slide bracket (250) corresponding to the first surface (2401) and slidably coupled to the base bracket (240);
a bendable member (260) connected to an end of the slide bracket (250), at least partially supported by the at least one first roller (241), and arranged to be at least partially slid into the inner space through a sliding motion of the slide bracket (250);
a flexible display (230) comprising a first area (230a) fixed to the slide bracket and a second area (230b) extending from the first area (230a) and fixed to and supported by the bendable member (260), at least a portion of the second area (230b) being exposed from the inner space to be visible to the outside when the electronic device (200) is shifted from a slide-in state to a slide-out state;
a tension belt (270) wound around the at least one second roller (242) to be at least partially supported, the tension belt (270) being fixed to the slide bracket (250) at one end and fixed to the bendable member (260) at another end; and
a first elastic member (272) interconnecting the tension belt (270) and the bendable member (260) such that the tension belt (270) and the bendable member (260) have a mutually pulling tensile force,
**characterised in that**
the first elastic member (272) comprises at least one tension coil spring.

2. The electronic device of claim 1, wherein the bendable member (260) comprises:
multiple bars (2601) rotatably connected to each other;
a first support plate (261) coupled to a plurality of bars disposed at the one end among the multiple bars (2601) ; and
a second support plate (262) coupled to a plurality of bars disposed at the another end among the multiple bars (2601),
wherein the first support plate (261) is fixed to the slide bracket (250), and
wherein the second support plate (262) is elastically connected to the tension belt (270) via the first elastic member (272).

3. The electronic device of claim 2, wherein the at least one tension coil spring elastically interconnects a belt bracket (271) fixed to one end of the tension belt (270) and the second support plate (262).

4. The electronic device of claim 3, wherein the second support plate (262), the first elastic member (272), and the belt bracket (271) are disposed on a same line (L1).

## Patentansprüche

1. Elektronische Vorrichtung (200), umfassend:
eine Basishalterung (240), die eine erste Oberfläche (2401) und eine zweite Oberfläche (2402) gegenüber der ersten Oberfläche (2401) umfasst und ferner mindestens eine erste Rolle (241) und mindestens eine zweite Rolle (242) umfasst, die jeweils drehbar an gegenüberliegenden Enden der Basishalterung (240) angeordnet sind;
ein Abdeckelement (221), das mit der Basishalterung (240) gekoppelt ist, um der zweiten Oberfläche (2402) zu entsprechen, um einen Innenraum (2403) bereitzustellen;
eine Gleithalterung (250), die der ersten Oberfläche (2401) entspricht und verschiebbar an die Basishalterung (240) gekoppelt ist;
ein biegbares Element (260), das mit einem Ende der Gleithalterung (250) verbunden ist, mindestens teilweise durch die mindestens eine erste Rolle (241) gestützt ist und angeordnet ist, um durch eine Gleitbewegung der Gleithalterung (250) mindestens teilweise in den Innenraum geschoben zu werden;
eine flexible Anzeige (230), die einen ersten Bereich (230a), der an der Gleithalterung befestigt ist, und einen zweiten Bereich (230b), der sich von dem ersten Bereich (230a) erstreckt und an dem biegbaren Element (260) befestigt ist und durch dieses gestützt ist, umfasst, wobei mindestens ein Abschnitt des zweiten Bereichs (230b) von dem Innenraum freigelegt ist, dass er nach außen sichtbar ist, wenn die elektronische Vorrichtung (200) von einem eingeschobenen Zustand in einen herausgeschobenen Zustand verschoben wird;
ein Spannriemen (270), der um die mindestens eine zweite Rolle (242) gewickelt ist, dass er mindestens teilweise abgestützt wird, wobei der Spannriemen (270) an einem Ende an der Gleithalterung (250) und an einem anderen Ende an dem biegbaren Element (260) befestigt ist; und
ein erstes elastisches Element (272), das den Spannriemen (270) und das biegbare Element (260) miteinander derart verbindet, dass der Spannriemen (270) und das biegbare Element (260) eine gegenseitig ziehende Zugkraft aufweisen, **dadurch gekennzeichnet, dass** das erste elastische Element (272) mindestens eine Zugschraubenfeder umfasst.

2. Elektronische Vorrichtung nach Anspruch 1, wobei das biegbare Element (260) Folgendes umfasst:
mehrere Stangen (2601), die drehbar miteinander verbunden sind;
eine erste Stützplatte (261), die an eine Vielzahl von Stangen gekoppelt ist, die an dem einen Ende unter den mehreren Stangen (2601) angeordnet sind; und
eine zweite Stützplatte (262), die an eine Vielzahl von Stangen gekoppelt ist, die an dem anderen Ende unter den mehreren Stangen (2601) angeordnet sind,
wobei die erste Stützplatte (261) an der Gleithalterung (250) befestigt ist, und
wobei die zweite Stützplatte (262) über das erste elastische Element (272) elastisch mit dem Spannriemen (270) verbunden ist.

3. Elektronische Vorrichtung nach Anspruch 2, wobei die mindestens eine Zugschraubenfeder eine Riemenhalterung (271), die an einem Ende des Spannriemens (270) befestigt ist, und die zweite Stützplatte (262) elastisch miteinander verbindet.

4. Elektronische Vorrichtung nach Anspruch 3, wobei die zweite Stützplatte (262), das erste elastische Element (272) und die Riemenhalterung (271) auf einer gleichen Linie (L1) angeordnet sind.

## Revendications

1. Dispositif électronique (200) comprenant :
un support de base (240) comprenant une première surface (2401) et une seconde surface (2402) opposée à la première surface (2401), et comprenant en outre au moins un premier rouleau (241) et au moins un second rouleau (242), qui sont respectivement disposés de manière rotative aux extrémités opposées du support de base (240) ;
un élément de capot (221) couplé au support de base (240) pour correspondre à la seconde surface (2402) de manière à fournir un espace interne (2403) ;
un support coulissant (250) correspondant à la première surface (2401) et couplé de manière coulissante au support de base (240) ;
un élément pliable (260) raccordé à une extrémité du support coulissant (250), au moins partiellement supporté par l'au moins un premier rouleau (241), et agencé pour être au moins partiellement coulissé dans l'espace interne par un mouvement coulissant du support coulissant (250) ;
un affichage souple (230) comprenant une première zone (230a) fixée au support coulissant et une seconde zone (230b) s'étendant à partir de la première zone (230a) et fixée à et supportée par l'élément pliable (260), au moins une partie de la seconde zone (230b) étant exposée depuis l'espace interne pour être visible vers l'extérieur lorsque le dispositif électronique (200) est passé d'un état coulissant vers l'intérieur à un état coulissant vers l'extérieur ;
une courroie de tension (270) enroulée autour de l'au moins un second rouleau (242) pour être au moins partiellement supportée, la courroie de tension (270) étant fixée au support coulissant (250) au niveau d'une extrémité et fixée à l'élément pliable (260) au niveau d'une autre extrémité ; et
un premier élément élastique (272) interconnectant la courroie de tension (270) et l'élément pliable (260) de sorte que la courroie de tension (270) et l'élément pliable (260) présentent une force de traction à tirage mutuel, **caractérisé en ce que** le premier élément élastique (272) comprend au moins un ressort hélicoïdal de tension.

2. Dispositif électronique selon la revendication 1, dans lequel l'élément pliable (260) comprend :
de multiples barres (2601) raccordées de manière rotative les unes aux autres ;
une première plaque de support (261) couplée à une pluralité de barres disposées au niveau de l'une extrémité parmi les multiples barres (2601) ; et
une seconde plaque de support (262) couplée à une pluralité de barres disposées à l'autre extrémité parmi les multiples barres (2601),
dans lequel la première plaque de support (261) est fixée au support coulissant (250), et
dans lequel la seconde plaque de support (262) est raccordée élastiquement à la courroie de tension (270) par l'intermédiaire du premier élément élastique (272).

3. Dispositif électronique selon la revendication 2, dans lequel l'au moins un ressort hélicoïdal de tension interconnecte élastiquement un support de courroie (271) fixé à une extrémité de la courroie de tension (270) et la seconde plaque de support (262).

4. Dispositif électronique selon la revendication 3, dans lequel la seconde plaque de support (262), le premier élément élastique (272) et le support de courroie (271) sont disposés sur une même ligne (L1).
